(19) **Europäisches Patentamt / European Patent Office / Office européen des brevets**

(11) **EP 2 713 308 B1**

(12) **EUROPEAN PATENT SPECIFICATION**

(45) Date of publication and mention
of the grant of the patent:
**03.11.2021 Bulletin 2021/44**

(51) Int Cl.:
***G06K 9/00*** *(2006.01)*

(21) Application number: **13184081.1**

(22) Date of filing: **12.09.2013**

(54) **Method and system for using fingerprints to track moving objects in video**

Verfahren und System zur Verwendung von Fingerabdrücken zum Verfolgen beweglicher Objekte in Videos

Procédé et système d'utilisation d'empreintes digitales pour suivre des objets en mouvement dans une vidéo

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2012 US 201213631726**

(43) Date of publication of application:
**02.04.2014 Bulletin 2014/14**

(73) Proprietor: **The Boeing Company**
**Chicago, IL 60606-1596 (US)**

(72) Inventors:
• **Mundhenk, Terrell Nathan**
**Malibu, CA California 90265 (US)**
• **Kim, Kyungnam**
**Malibu, CA California 90265 (US)**
• **Owechko, Yuri**
**Malibu, CA California 90265 (US)**

(74) Representative: **Boult Wade Tennant LLP**
**Salisbury Square House**
**8 Salisbury Square**
**London EC4Y 8AP (GB)**

(56) References cited:
**US-A1- 2003 219 146**

• **MUNDHENK T NATHAN ET AL: "Detection of unknown targets from aerial camera and extraction of simple object fingerprints for the purpose of target reacquisition", INTELLIGENT ROBOTS AND COMPUTER VISION XXIX: ALGORITHMS AND TECHNIQUES, SPIE, 1000 20TH ST. BELLINGHAM WA 98225-6705 USA, vol. 8301, no. 1, 22 January 2012 (2012-01-22), pages 1-14, XP060000658, DOI: 10.1117/12.906491 [retrieved on 2012-01-23]**
• **KANG-YU NI ET AL: "Manifold-based fingerprinting for target identification", COMPUTER VISION AND PATTERN RECOGNITION WORKSHOPS (CVPRW), 2012 IEEE COMPUTER SOCIETY CONFERENCE ON, IEEE, 16 June 2012 (2012-06-16), pages 1-6, XP032206821, DOI: 10.1109/CVPRW.2012.6239199 ISBN: 978-1-4673-1611-8**
• **None**

**Description**

**BACKGROUND INFORMATION**

**1. Field:**

The present disclosure relates generally to image processing and, in particular, to detecting and tracking moving objects in images. Still more particularly, the present disclosure relates to a system and method for detecting and tracking moving objects in images by creating fingerprints for the moving objects.

**2. Background:**

Different types of techniques are currently available for detecting and tracking moving objects in a sequence of images, such as a video. However, some of these currently available techniques may be unable to detect and/or track a moving object with a desired level of accuracy. For example, some currently available techniques may be unable to detect and/or track a moving object when that moving object becomes partially occluded in one or more images in the sequence of images.

Additionally, some currently available techniques may be unable to determine the contour of a moving object with a desired level of accuracy. As used herein, the contour of an object may be the outline of an object or the shape of the object. This outline may be the outline of the external surface of the object.

Segmentation is an example of one process used to determine the contours of objects in images. As used herein, "segmentation" is the process of dividing an image into multiple segments. Each segment includes a group of pixels that have been identified as sharing a similar visual characteristic. This visual characteristic may be, for example, without limitation, color, texture, intensity, or some other type of characteristic. In this manner, segments that are adjacent to each other are different with respect to the particular visual characteristic beyond some selected threshold.

Segmentation may be used to simplify and/or change the representation of an image such that the segmented image is easier to analyze as compared to the original image. For example, when an image is segmented to form a segmented image, features within the segmented image may be more easily discernible as compared to the original image. In particular, the contours of objects and/or features captured within the original image may be more easily discernible within the segmented image.

However, some currently available segmentation techniques may be unable to segment images in a manner that defines the contour of a single moving object as accurately as desired. For example, when an image is segmented based on color to form a segmented image, an object that is captured in the image as having two or more colors may be represented by multiple segments within the segmented image.

Consequently, the contour of the object within the segmented image may not be as easily discernible as desired. Further, extracting information about the features represented by these types of segments may yield information that is less accurate than desired. Therefore, it would be desirable to have a method and apparatus that takes into account at least some of the issues discussed above, as well as other possible issues.

"Detection of unknown targets from aerial camera and extraction of simple object fingerprints for the purpose of target reacquisition", by T. Nathan Mundhenk et al., in accordance with its abstract, states an aerial multiple camera tracking paradigm needs to not only spot unknown targets and track them, but also needs to know how to handle target reacquisition as well as target handoff to other cameras in the operating theater. The document discusses such a system which is designed to spot unknown targets, track them, segment the useful features and then create a signature fingerprint for the object so that it can be reacquired or handed off to another camera. The tracking system spots unknown objects by subtracting background motion from observed motion allowing it to find targets in motion, even if the camera platform itself is moving. The area of motion is then matched to segmented regions returned by the EDISON mean shift segmentation tool. Whole segments which have common motion and which are contiguous to each other are grouped into a master object. Once master objects are formed, we have a tight bound on which to extract features for the purpose of forming a fingerprint. This is done using color and simple entropy features. These can be placed into a myriad of different fingerprints. To keep data transmission and storage size low for camera handoff of targets, we try several different simple techniques. These include Histogram, Spatiogram and Single Gaussian Model. These are tested by simulating a very large number of target losses in six videos over an interval of 1000 frames each from the DARPA VIVID video set. Since the fingerprints are very simple, they are not expected to be valid for long periods of time. As such, the shelf life of fingerprints is tested. This is how long a fingerprint is good for when stored away between target appearances. Shelf life gives us a second metric of goodness and tells us if a fingerprint method has better accuracy over longer periods. In videos which contain multiple vehicle occlusions and vehicles of highly similar appearance we obtain a reacquisition rate for automobiles of over 80% using the simple single Gaussian model compared with the null hypothesis of <20%. Thus, a single Gaussian model is used for target reacquisition.

"Manifold-based fingerprinting for target identification", by Kang-Yu Ni et al., in accordance with its abstract, states we propose a fingerprint analysis algorithm based on using product manifolds to create robust signatures for individual targets in motion imagery. The purpose of target fingerprinting is to reidentify a target after it disappears and then reappears due to occlusions or out of camera view and to track targets persistently under camera handoff situations. The proposed method is statistics-based and has the benefit of being compact and invariant to viewpoint, rotation, and scaling. Moreover, it is a general framework and does not assume a particular type of objects to be identified. We also propose a method to detect outliers of a statistical manifold formed from the training data of individual targets.

## SUMMARY

There is described herein an image processing system comprising: a motion detector configured to detect motion within a current image by forming a motion image from the current image and a previous image, the motion image including a set of motion profiles representing local motion in the motion image; and an object tracker configured to receive the current image and the motion image, the object tracker comprising: an image segmenter configured to segment the current image in a sequence of images into a plurality of segments to form a segmented image and fuse together segments in the plurality of segments belonging to a same motion profile of the set of motion profiles to form a set of master segments, each master segment for representing a set of moving objects or a set of image anomalies, the image segmenter configured to generate master statistics for each master segment of the set of master segments by generating segment data for the respective master segment and fitting the segment data to a mathematical model, wherein the segment data includes chroma data; luma data; pixel location data; and/or chroma data that has been filtered using an entropy filter; and a consistency checker configured to identify a set of target segments from the set of master segments by matching a master segment to a previously identified master segment that was identified for the previous image by determining that a difference between master statistics for the master segment and master statistics identified for the previously identified master segment of the previous image is not greater than a threshold, wherein the set of target segments represents a set of moving objects in the current image and the previous image; and a fingerprinter configured to create a set of target segment fingerprints for the target segments, each target segment fingerprint defining a description of a unique set of features for a moving object, the set of target segment fingerprints for use in tracking the set of moving objects in a number of subsequent images in the sequence of images wherein: each of the plurality of target segment fingerprints is a fingerprint for a corresponding target segment in the plurality of target segments; the fingerprinter is further configured to create a plurality of segment fingerprints for plurality of segments in segmented image, each of plurality of segment fingerprints is a fingerprint for a corresponding segment in plurality of segments; the image segmenter uses the plurality of segment fingerprints to determine which of the plurality of segments to fuse together to form the set of master segments in addition to the set of motion profiles; the object tracker is configured to use the set of target segment fingerprints to track the set of moving objects in the number of subsequent images in the sequence of images; and the image processing system is configured to: create a background fingerprint for a background of the segmented image; match each segment fingerprint against a set of prior segment fingerprints as well as the background fingerprint to form a set of matched segment fingerprints, the set of prior segment fingerprints are from an image processed prior to the current image; and fuse together segments that correspond to segment fingerprints that match each other in the set of matched segment fingerprints and that are adjacent to each other to form a set of master segments.

There is described herein a computer-implemented method for tracking moving objects in a sequence of images, the computer-implemented method comprising: detecting motion within a current image in the sequence of images by forming a motion image from the current image and a previous image, the motion image including a set of motion profiles representing local motion in the motion image; segmenting the current image into a plurality of segments; fusing together segments in the plurality of segments belonging to a same motion profile of the set of motion profiles to form a set of master segments each master segment for representing a set of moving objects or a set of image anomalies, creating a plurality of segment fingerprints for the plurality of segments, wherein each of the plurality of segment fingerprints is a fingerprint for a corresponding segment in the plurality of segments; using the plurality of segment fingerprints in addition to the set of motion profiles to determine which of the plurality of segments to fuse together by: creating a background fingerprint for a background of the segmented image; matching each segment fingerprint against a set of prior segment fingerprints as well as the background fingerprint to form a set of matched segment fingerprints, the set of prior segment fingerprints are from an image processed prior to the current image; and fusing together segments that correspond to segment fingerprints that match each other in the set of matched segment fingerprints and that are adjacent to each other to form a set of master segments; identifying a set of target segments from the set of master segments by generating master statistics for each master segment in the set of master segments; and matching a master segment to a previously identified master segment that was identified for the previous image by determining that a difference between master statistics for the master segment and master statistics identified for the previously identified master segment of the previous image is not greater than a threshold, wherein the set of target segments represents a set of moving objects in the current image and the previous image; and creating a set of target segment fingerprints for the target segments, each target segment fingerprint defining a description of a unique set of features for a moving object; using the set of target segment fingerprints to track the set of moving objects in a number of subsequent images in the sequence of images wherein the step of generating the master statistics for each master segment in the set of master segments comprises: generating segment data for the respective master segment, wherein the segment data includes chroma data; luma data; pixel location data; and/or chroma data that has been filtered using an entropy filter; and fitting the segment data to a mathematical model to generate the master statistics for the master segment.

In yet another illustrative embodiment, a computer-implemented method for tracking moving objects in a sequence of images is provided. Local motion and global motion are identified in a current image. The global motion is subtracted from the local motion to form a motion image. The motion image includes a set of motion profiles. The current image in the sequence of images is segmented into a plurality of segments to form a segmented image. Segments in the plurality of segments belonging to a same motion profile are fused together to form a master image having a set of master segments. A set of target segments is identified from the set of master segments to form a target image. The set of target segments represents a set of moving objects in the current image. A set of fingerprints is created for use in tracking the set of moving objects in a number of subsequent images in the sequence of images.

The features and functions can be achieved independently in various embodiments of the present disclosure or may be combined in yet other embodiments in which further details can be seen with reference to the following description and drawings.

## BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

Figure 1 is an illustration of an image processing environment in the form of a block diagram in which an illustrative embodiment may be implemented;
Figure 2 is an illustration of a fingerprinter in the form of a block diagram in accordance with an illustrative embodiment;
Figure 3 is an illustration of an image in accordance with an illustrative embodiment;
Figure 4 is an illustration of a motion image in accordance with an illustrative embodiment;
Figure 5 is an illustration of an enlarged view of a portion of a motion image in accordance with an illustrative embodiment;
Figure 6 is an illustration of a segmented image in accordance with an illustrative embodiment;
Figure 7 is an illustration of a portion of a segmented image in accordance with an illustrative embodiment;
Figure 8 is an illustration of a moving segment image in accordance with an illustrative embodiment;
Figure 9 is an illustration of a master image in accordance with an illustrative embodiment;
Figure 10 is an illustration of an enlarged view of a portion of a master image in accordance with an illustrative embodiment;
Figure 11 is an illustration of an image in accordance with an illustrative embodiment;
Figure 12 is an illustration of a master image in accordance with an illustrative embodiment;
Figure 13 is an illustration of a process for performing image processing in the form of a flowchart in accordance with an illustrative embodiment;
Figure 14 is an illustration of a process for establishing a set of target segments from a set of master segments in the form of a flowchart in accordance with an illustrative embodiment;
Figure 15 is a process for creating a fingerprint in the form of a flowchart in accordance with an illustrative embodiment;
Figure 16 is an illustration of a process for forming a set of master segments in the form of a flowchart in accordance with an illustrative embodiment; and
Figure 17 is an illustration of a data processing system in accordance with an illustrative embodiment.

## DETAILED DESCRIPTION

The different illustrative embodiments recognize and take into account different considerations. For example, the different illustrative embodiments recognize and take into account that some currently available systems and methods for detecting and tracking objects and, in particular, moving objects, may not perform as well as desired.

In particular, some currently available methods for detecting and tracking objects in video may be unable to track objects, which are at least partially occluded in one or more of the images that form the video, with a desired level of accuracy. Further, these currently available methods may be unable to track objects that temporarily move out of the field of view of the video camera system for some period of time during the video. Still further, some currently available methods for tracking objects may require instructions on which types of objects to search for and track. For example, these methods may be unable to track objects and, in particular, moving objects, without knowing which type of object to detect and track.

Thus, the different illustrative embodiments provide a system and method for generating a fingerprint of a moving object, which has been detected in an image in a sequence of images, for use in detecting and tracking the moving object over the entire sequence of images. In particular, the fingerprint may be used for detecting and tracking the moving object in an image in the sequence of images even when the moving object is partially occluded or no longer in the field of view in the image.

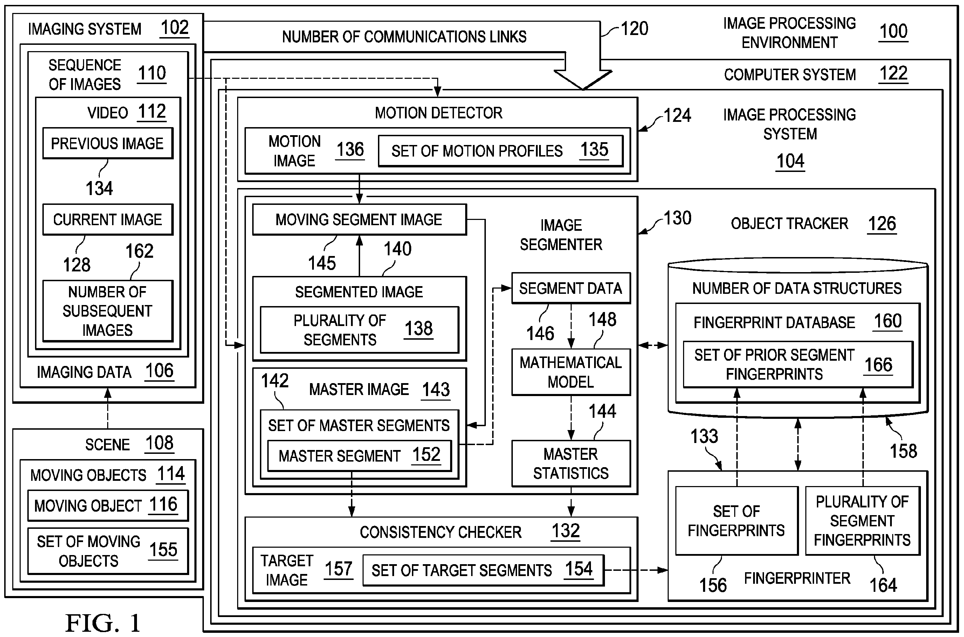

Referring now to the figures and, in particular, with reference to **Figure 1,** an illustration of an image processing environment in the form of a block diagram is depicted in accordance with an illustrative embodiment. In **Figure 1,** an image processing environment **100** includes an imaging system **102** and an image processing system **104.**

In these illustrative examples, the imaging system **102** may be any type of sensor system configured to generate imaging data **106** for a scene **108.** The imaging system **102** may be selected from, for example, without limitation, an electro-optical (EO) imaging system, an infrared (IR) imaging system, a radar imaging system, a thermal imaging system, an ultrasound imaging system, a light detection and ranging (LIDAR) system, and some other suitable type of imaging system. In this manner, the imaging data **106** generated by the imaging system **102** may comprise electro-optical images, infrared images, radar images, thermal images, light detection and ranging images, or some other type of images. Electro-optical images may be, for example, visible light images.

In these illustrative examples, the imaging data **106** takes the form of a sequence of images **110.** As used herein, an "image" is a digital two-dimensional image comprising pixels organized into rows and columns. Each pixel may have a value representing a color and/or brightness for that pixel. Further, a "sequence of images", as used herein, is two or more images generated in a consecutive order with respect to time.

The sequence of images **110** generated for the scene **108** may be referred to as a video **112** of the scene **108.** When the sequence of images **110** is referred to as the video **112,** each image in the sequence of images **110** may be referred to as a "frame".

The scene **108** may be a physical area, such as, for example, without limitation, an area of a city, a neighborhood, an area over an ocean, an area in a forest, an area in a desert, a town, a geographical area, an area inside a manufacturing facility, a floor in a building, a section of a highway, or some other suitable type of area.

Moving objects **114** are present in the scene **108.** As used herein, a "moving object", such as a moving object **116,** is any object that is moving relative to a field of view for the imaging system **102.** The moving object **116** is an example of one of the moving objects **114** in the scene **108.**

In this manner, the moving object **116** takes the form of any object that does not remain stationary within the scene **108.** For example, the moving object **116** may take the form of a person walking or running within the scene **108,** a vehicle, a mobile structure, an object located on a moving vehicle, or some other suitable type of moving object. A vehicle in the scene **108** may take the form of, for example, without limitation, a car, a truck, an aircraft, a van, a tank, an unmanned aerial vehicle, a spaceship, a missile, a rocket, or some other suitable type of vehicle.

In some cases, the moving object **116** may be a combination of two or more objects moving together. For example, the moving object **116** may comprise two or more objects that are attached to each other and thereby moving together with the same type of motion.

Additionally, the moving object **116** may take the form of any object that moves with respect to the field of view for the imaging system **102** as the angle at which the imaging system **102** is directed and/or as the position of the imaging system **102** changes. For example, the moving object **116** may be a stationary object that appears to move within the sequence of images **110** when the imaging system **102** is moved.

The imaging system **102** is configured to send imaging data **106** to the image processing system **104** using a number of communications links **120.** As used herein, a "number of' items means one or more items. In this manner, the number of communications links **120** may be one or more communications links. The number of communications links **120** may include at least one of, for example, a wired communications link, a wireless communications link, an optical communications link, and some other type of communications link.

As used herein, the phrase "at least one of', when used with a list of items, means different combinations of one or more of the listed items may be used and only one of each item in the list may be needed. For example, "at least one of item A, item B, and item C" may include, for example, without limitation, item A or item A and item B. This example also may include item A, item B, and item C, or item B and item C. In other examples, "at least one of' may be, for example, without limitation, two of item A, one of item B, and 10 of item C; four of item B and seven of item C; or some other suitable combination.

The image processing system **104** may be implemented using hardware, software, or a combination of the two. In these illustrative examples, the image processing system **104** may be implemented in a computer system **122.** The computer system **122** may comprise a number of computers. When more than one computer is present in the computer system **122,** these computers may be in communication with each other.

The image processing system **104** is configured to process the imaging data **106** received from the imaging system **102**. In some illustrative examples, the image processing system **104** may receive the images in the sequence of images **110** one at a time as the images are generated by the imaging system **102**. For example, the image processing system **104** may receive the sequence of images **110** in substantially real-time as the images are generated. In other illustrative examples, the image processing system **104** may receive the entire sequence of images **110** at some point in time after the sequence of images **110** has been generated.

The image processing system **104** processes the sequence of images **110** to detect and track the presence of moving objects in the sequence of images **110**. As depicted, the image processing system **104** includes a motion detector **124** and an object tracker **126**. The motion detector **124** is configured to detect the presence of motion in the sequence of images **110**. The object tracker **126** is configured to track moving objects over the sequence of images **110**.

For example, the motion detector **124** receives a current image **128** in the sequence of images **110** for processing. The motion detector **124** is configured to detect motion within the current image **128**. The motion detector **124** uses the current image **128** and a previous image **134** to form a motion image **136**. The previous image **134** is the image in the sequence of images **110** previous to the current image **128** without any images between the current image **128** and the previous image **134**. Further, the previous image **134** is the image that was previously processed by the motion detector **124**.

The motion detector **124** uses the current image **128** and the previous image **134** to identify local motion and global motion in the current image **128**. As used herein, "global motion" in the current image **128** may be an overall motion for the current image **128**. Global motion may include, for example, the motion of background features in the current image **128** relative to the background features in the previous image **134**. These background features may include, for example, without limitation, trees, sky, roads, bushes, greenery, grass, buildings, manmade structures, and/or other types of background features. In this manner, global motion in the current image **128** is the motion of the overall scene **108** relative to the overall scene **108** in the previous image **134**.

As used herein, "local motion" includes motion that differs from global motion. Local motion may include, for example, the motion of foreground features, such as the moving objects **114,** in the current image **128** relative to the previous image **134**. The motion detector **124** may subtract the global motion identified in the current image **128** from the local motion identified in the current image **128** to form the motion image **136**.

The motion image **136** includes a set of motion profiles **135**. As used herein, a "set of" items may be zero or more items. In other words, a set of items may be a null or empty set. In this manner, in some cases, the set of motion profiles **135** may include one, two, three, five, ten, or some other number of motion profiles. In other cases, the set of motion profiles **135** may be an empty set.

As used herein, a "motion profile" is a portion of the motion image **136** that represents local motion in the motion image **136**. For example, a motion profile may be a portion of the motion image **136** having a color different from a background of the motion image **136**. This color may represent, for example, a moving object, such as the moving object **116** in the scene **108**.

The object tracker **126** is configured to receive the current image **128** and the motion image **136** for processing. As depicted, the object tracker **126** includes an image segmenter **130,** a number of data structures **158,** a consistency checker **132,** and a fingerprinter **133**.

The image segmenter **130** is configured to segment, or divide, the current image **128** into a plurality of segments **138** to form a segmented image **140**. In these illustrative examples, each segment in the plurality of segments **138** includes one or more pixels. When more than one pixel is present in a segment, these pixels are contiguous pixels. In other words, each pixel in the segment is adjacent to another pixel in the segment without any other pixels not belonging to the segment located between these two pixels.

In these illustrative examples, the image segmenter **130** segments the current image **128** such that all of the pixels in each segment in the plurality of segments **138** share a similar visual characteristic. The visual characteristic may be, for example, a color, an intensity value, a texture, or some other type of visual characteristic. For example, all of the pixels in a particular segment in the plurality of segments **138** may have a value within a selected range that represents a selected color.

The image segmenter **130** takes into account that different parts of a moving object, such as the moving object **116** in the scene **108,** may have different visual characteristics in the current image **128**. For example, when the moving object **116** is an automobile, the body of the automobile may appear as one color in the current image **128,** while the windows of the automobile may appear as another color in the current image **128**.

Consequently, the moving object **116** may be represented in the segmented image **140** by multiple segments in the plurality of segments **138**. Discerning which segments in the plurality of segments **138** actually represent the moving object **116** may not be easily achieved.

Thus, the image segmenter **130** is configured to group segments in the plurality of segments **138** together to form a set of master segments **142** using the motion image **136**. In particular, the image segmenter **130** fuses together segments in the plurality of segments **138** belonging to a same motion profile to form a master image **143** having the set of master segments **142.**

More specifically, segments in the plurality of segments **138** that belong to a same motion profile in the set of motion profiles **135** in the motion image **136** are fused together to form a master segment in the set of master segments **142.** In these illustrative examples, a segment in the plurality of segments **138** may be considered as "belonging" to a particular motion profile in the set of motion profiles **135** when the number of pixels in the segment that overlap with the particular motion profile is greater than some selected threshold.

In these illustrative examples, the image segmenter **130** may only fuse together segments that are contiguous. In other words, two segments in the plurality of segments **138** may be fused together only when those two segments are adjacent to each other. In this manner, each master segment in the set of master segments **142** comprises a number of contiguous segments.

In some illustrative examples, the image segmenter **130** integrates the motion image **136** with the segmented image **140** to form a moving segment image **145**. The moving segment image **145** may be created by, for example, without limitation, overlaying the motion image **136** over the segmented image **140**. The portion of segments in the plurality of segments **138** overlapped by the set of motion profiles **135** may be considered "moving segments." For each motion profile, the moving segments overlapped by that motion profile are fused together to form a master segment.

Thereafter, the image segmenter **130** generates master statistics **144** for the set of master segments **142**. The image segmenter **130** identifies segment data **146** for each master segment in the set of master segments **142**. The segment data **146** for a particular master segment includes chroma data, luma data, pixel location data, and/or chroma data that has been filtered using an entropy filter.

Chroma data may include, for example, a chroma value for each pixel in the master segment. The chroma value may be a color value or a saturation value. Luma data may include, for example, a luma value for each pixel in the master segment. The luma value may be a brightness value. Pixel location data may include, for example, a location for each pixel in the master segment with respect to the rows and columns of pixels in the master image **143**. Entropy data may include chroma data that has been filtered using an entropy filter.

The image segmenter **130** generates the master statistics **144** by fitting the segment data **146** to a mathematical model **148**. In some cases, the mathematical model **148** may be a linear regression model, such as, for example, without limitation, a generalized linear model (GLM). The generalized linear model may be, for example, a Gaussian model with full covariance.

The image segmenter **130** sends the master image **143** and the master statistics 144 to the consistency checker **132** for further processing. The consistency checker **132** is configured to determine whether each master segment in the set of master segments **142** actually represents a moving object. In other words, the consistency checker **132** determines whether a master segment in the set of master segments **142** represents a moving object or an image anomaly.

The consistency checker **132** matches a master segment **152** in the set of master segments **142** to a previously identified master segment that was identified for the previous image **134**. The consistency checker **132** determines whether a difference between the master statistics **144** for the master segment **152** and the master statistics identified for the previously identified master segment is greater than some selected threshold.

If the difference is not greater than the selected threshold, the master segment **152** is added to a set of target segments **154**. In this manner, the consistency checker **132** creates the set of target segments **154** for the current image **128.** The set of target segments **154** may include some, none, or all of the set of master segments **142**.

Each target segment in the set of target segments **154** represents a moving object in the current image **128**. In other words, the set of target segments **154** represents a set of moving objects **155**. The set of moving objects **155** may include some, none, or all of the moving objects **114** in the scene **108,** depending on the implementation. For example, in some cases, the set of moving objects **155** may include the moving object **116.**

In some illustrative examples, the consistency checker **132** may be unable to match the master segment **152** to a previously identified master segment. In these cases, the master segment **152** may be analyzed to determine whether the master segment **152** represents an anomaly or a new moving object that was not previously detected. When the master segment **152** is identified as representing a new moving object, the master segment **152** is added to the set of target segments **154**. The consistency checker **132** sends the set of target segments **154** to the fingerprinter **133** as a target image **157.**

The fingerprinter **133** receives the target image **157** and identifies a set of fingerprints **156** for the set of target segments **154** in the target image **157**. As used herein, a "fingerprint" for a target segment is a description of the unique features for the moving object represented by that target segment. The set of fingerprints **156** are configured for use in tracking the set of moving objects **155** in a number of subsequent images in the sequence of images **110**.

The fingerprinter **133** stores the set of fingerprints **156** in the number of data structures **158**. A data structure in the number of data structures **158** may take the form of, for example, without limitation, a table, a spreadsheet, a chart, a database, a report, an associative memory, or some other type of data structure.

As one illustrative example, the set of fingerprints **156** may be stored in a fingerprint database **160** in the number of data structures **158** for future detection and tracking of moving objects. The fingerprint database **160** includes the fingerprints created for the portion of the moving objects **114** in the scene **108** detected and tracked within the sequence of images **110**.

The object tracker **126** uses the set of fingerprints **156** stored in the fingerprint database **160** to increase the likelihood of being able to track the set of moving objects **155** in a number of subsequent images **162** in the sequence of images **110**. In particular, the set of fingerprints **156** is used to track the set of moving objects **155** in the number of subsequent images **162** even after one or more of these moving objects becomes partially or fully occluded or when one or more of these moving objects moves out of the field of view of the imaging system **102**. The number of subsequent images **162** are the images in the sequence of images **110** after the current image **128**.

In these illustrative examples, each fingerprint in the set of fingerprints **156** is a lightweight fingerprint. As used herein, a "lightweight fingerprint" is a description of the features for the moving object represented by the corresponding target segment that is minimized with respect to spatial and temporal complexity. In this manner, the amount of storage space needed to store the set of fingerprints **156** may be reduced.

The image segmenter **130** uses fingerprints to determine which of the plurality of segments **138** are to be fused together to form the set of master segments **142** in addition to the motion image **136**. The image segmenter **130** sends the segmented image **140** to the fingerprinter **133**. The fingerprinter **133** creates a plurality of segment fingerprints **164** for the plurality of segments **138** in the segmented image **140**. Each of the plurality of segment fingerprints **164** is a fingerprint for a corresponding segment in the plurality of segments **138**.

The fingerprinter **133** stores the plurality of segment fingerprints **164** in the fingerprint database **160** for use by image segmenter. The image segmenter **130** retrieves the plurality of segment fingerprints **164** and a set of prior segment fingerprints **166** from the fingerprint database **160** and uses these different fingerprints to form the set of master segments **142**.

The set of prior segment fingerprints **166** includes the set of fingerprints previously identified for the previous image **134** based on the target segments identified for the previous image **134**. In this illustrative example, the image segmenter **130** groups the contiguous segment fingerprints in the plurality of segment fingerprints **164** that match a particular fingerprint in the set of prior segment fingerprints **166** together to form a master segment.

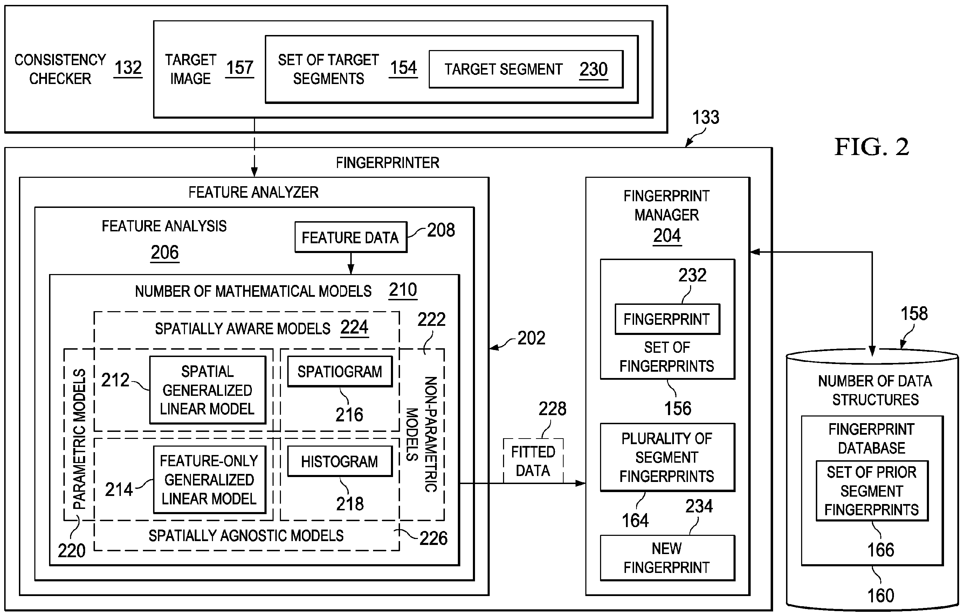

With reference now to **Figure 2**, an illustration of a fingerprinter in the form of a block diagram is depicted in accordance with an illustrative embodiment. In **Figure 2**, the fingerprinter **133** from **Figure 1** is depicted in greater detail.

As depicted, the fingerprinter **133** receives the target image **157** for processing. The fingerprinter **133** includes a feature analyzer **202** and a fingerprint manager **204**. The feature analyzer **202** is configured to perform feature analysis **206** for each target segment in the set of target segments **154** in the target image **157** to form the set of fingerprints **156**. In these illustrative examples, performing the feature analysis **206** may include extracting feature data **208** for each target segment in the set of target segments **154** and fitting the feature data **208** to a number of mathematical models **210**.

The number of mathematical models **210** may include different types of models. A model in the number of mathematical models **210** may be, for example, without limitation, parametric or non-parametric. As used herein, a "parametric model" is a family of distributions that can be described using a finite number of parameters. In contrast, a "non-parametric model," as used herein, does not rely on the data being fitted belonging to any distributions.

Further, a model in the number of mathematical models **210** may be, for example, without limitation, spatially aware or spatially agnostic. A spatially aware model may take into account the locations, spatial orientation, and/or alignment of features. However, a spatially agnostic model may not take into account the locations, spatial orientation, or alignment of features.

A spatial generalized linear model **212 and** a feature-only generalized linear model **214** are examples of parametric models **220**. A spatiogram **216** and a histogram **218** are examples of non-parametric models **222**. Further, the spatial generalized linear model **212** and the spatiogram **216** are examples of spatially aware models **224**. The feature-only generalized linear model **214** and the histogram **218** are examples of spatially agnostic models **226**.

The feature data **208** for each target segment in the set of target segments **154** may be fit to one or more of the number of mathematical models **210** to form fitted data **228** for each target segment in the set of target segments **154**. For example, the feature analyzer **202** may fit the feature data **208** for a target segment **230** in the set of target segments **154** to the spatial generalized linear model **212**, the feature-only generalized linear model **214**, the spatiogram **216**, the histogram **218**, or some combination of the above to form the fitted data **228** for the target segment **230**.

When the fingerprinter **133** is configured to create the plurality of segment fingerprints **164** as described in **Figure 1**, the feature data **208** may be extracted for each of the plurality of segments **138** in **Figure 1** and fitted to the number of mathematical models **210** in a manner similar to the manner described above. In particular, the feature data **208** for the plurality of segments **138** may be fitted to the number of mathematical models **210** to form the fitted data **228** for each segment in the plurality of segments **138**.

The fingerprint manager **204** is configured to receive the fitted data **228** for the set of target segments **154** and create the set of fingerprints **156**. The fitted data **228** for each target segment in the set of target segments **154** is used to form a fingerprint in the set of fingerprints **156**. For example, the fitted data **228** for the target segment **230** is used to form a fingerprint **232.** In one illustrative example, the target segment **230** represents the moving object **116** in **Figure 1.** Consequently, the fingerprint **232** is a fingerprint for the moving object **116.**

In this manner, the set of fingerprints **156** is created for the current image **128** in **Figure 1.** The fingerprint manager **204** is configured to store the set of fingerprints **156** in the number of data structures **158** for use in processing the number of subsequent images **162** in the sequence of images **110** in **Figure 1.** For example, the set of fingerprints **156** may be stored along with other fingerprints in the fingerprint database **160.**

When the fingerprint manager **204** receives the fitted data **228** for the plurality of segments **138** in **Figure 1** from the feature analyzer **202,** the fingerprint manager **204** uses the fitted data **228** for the plurality of segments **138** to create the plurality of segment fingerprints **164.** The fingerprint manager **204** may store the plurality of segment fingerprints **164** in the number of data structures **158** and/or send the plurality of segment fingerprints **164** to the image segmenter **130** in **Figure 1.**

During the processing of the number of subsequent images **162** in **Figure 1,** one or more of the set of moving objects **155** in **Figure 1** may become partially occluded or no longer visible. For example, the moving object **116** in **Figure 1** may be partially occluded in one or more of the number of subsequent images **162.** Consequently, the moving object **116** may not be detectable in these subsequent images. However, the fingerprint **232** for the moving object **116** may be used to reacquire the track of the moving object **116.**

For example, new fingerprints that are created for images after the current image **128** in **Figure 1** may be compared to the set of fingerprints **156** and any other previously created fingerprints stored in the fingerprint database **160.** This comparison is used to determine whether any of the new fingerprints are for moving objects for which fingerprints were previously created.

As one illustrative example, one of the number of subsequent images **162** in **Figure 1** may be processed and a new fingerprint **234** may be created for this subsequent image. In this illustrative example, the fingerprint manager **204** compares the new fingerprint **234** to the different fingerprints stored in the fingerprint database **160** to determine whether the new fingerprint **234** is for a moving object for which a fingerprint was previously created.

For example, the fingerprint manager **204** may compare the new fingerprint **234** with the fingerprint **232.** If the new fingerprint **234** matches the fingerprint **232** within selected tolerances, the fingerprint manager **204** determines that the new fingerprint **234** and the fingerprint **232** are for the same moving object, which is the moving object **116.**

In some illustrative examples, the fingerprint manager **204** averages the new fingerprint **234** and the fingerprint **232** to create a modified fingerprint that replaces the fingerprint **232** in the fingerprint database **160.** In other illustrative examples, fingerprint the manager **204** replaces the fingerprint **232** with the new fingerprint **234** in the fingerprint database **160.** In this manner, fingerprints may be used to track moving objects and reacquire the tracks of moving objects in the sequence of images **110** in **Figure 1.**

In some cases, the fingerprint manager **204** may be configured to use previously created fingerprints to track stationary objects. For example, in some cases, a moving object for which a fingerprint has been previously created may become stationary during the time over which the sequence of images **110** is generated. The previously created fingerprint may be used to keep tracking this object even when the object is not moving.

The illustrations of the image processing environment **100** in **Figure 1** and **the** fingerprinter **133** in **Figure 2** are not meant to imply physical or architectural limitations to the manner in which an illustrative embodiment may be implemented. Other components in addition to or in place of the ones illustrated may be used. Some components may be optional. Also, the blocks are presented to illustrate some functional components. One or more of these blocks may be combined, divided, or combined and divided into different blocks when implemented in an illustrative embodiment.

For example, the image segmenter **130,** the consistency checker **132,** and the fingerprinter **133** may all be part of the same module in some cases. In some illustrative examples, other mathematical models may be used in addition to and/or in place of the models described for the number of mathematical models **210** in **Figure 2.**

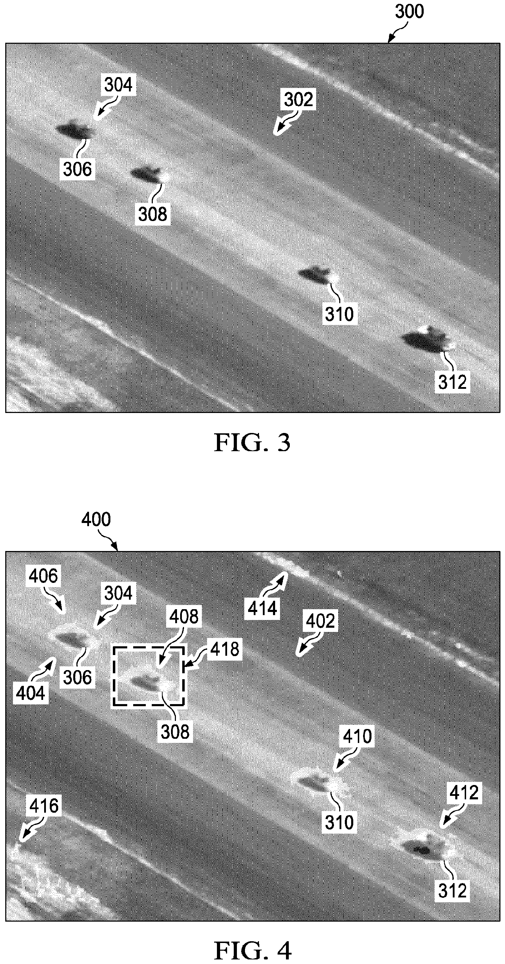

With reference now to **Figure 3,** an illustration of an image is depicted in accordance with an illustrative embodiment. An image **300** is an example of an image that may be generated by an imaging system, such as the imaging system **102** in **Figure 1.**

In particular, the image **300** is an example of one implementation for an image in the sequence of images **110** in **Figure 1.** Further, the image **300** may be an example of one implementation for the current image **128** in **Figure 1.** As depicted, the image **300** includes a background **302** and a set of moving objects **304.** Examples of moving objects in the set of moving objects **304** in the image **300** include, but are not limited to, vehicles **306, 308, 310,** and **312.**

With reference now to **Figure 4,** an illustration of a motion image is depicted in accordance with an illustrative embodiment. A motion image **400** is an example of one implementation for the motion image **136** in **Figure 1.** The image **300** from **Figure 3** may be processed by a motion detector, such as the motion detector **124** from **Figure 1,** to form the motion image **400.**

As depicted, the motion image **400** includes a background **402** and a set of motion profiles **404.** Further, the moving objects **304** from the image **300** in **Figure 3** are still visible in the motion image **400.** The background **402** represents the portion of the image **300** contributing to the global motion of the image **300** in **Figure 3.** The global motion of the image **300** may be, for example, the overall motion of the scene in the image **300**.

The set of motion profiles **404** is an example of one implementation for the set of motion profiles **135** in **Figure 1.** Each of the set of motion profiles **404** represents local motion in the image **300** from **Figure 3.** Local motion is motion that differs from the global motion of the image **300** beyond some selected threshold.

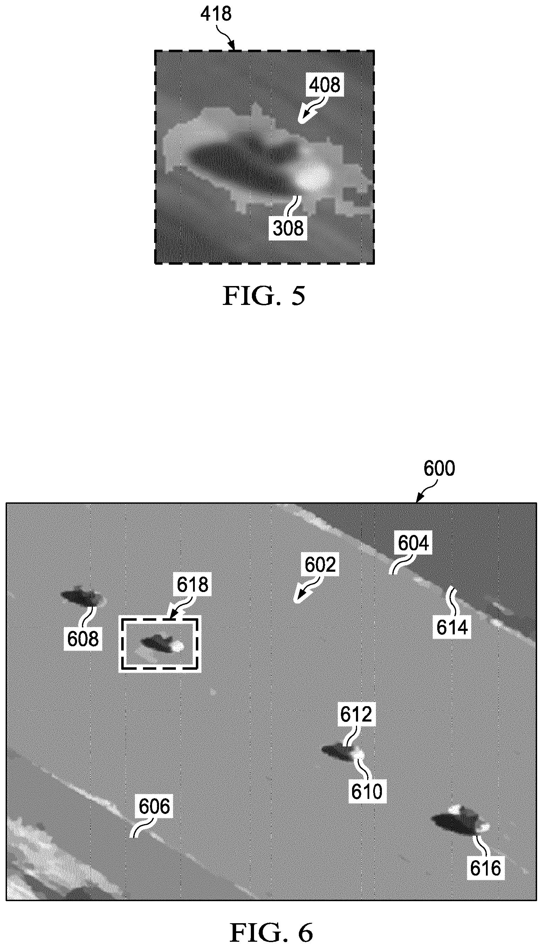

Examples of motion profiles in the set of motion profiles **404** include, but are not limited to, motion profiles **406, 408, 410, 412, 414,** and **416.** In this illustrative example, the motion profiles **406, 408, 410,** and **412** represent local motion that includes the motion of the vehicles **306, 308, 310,** and **312,** respectively. These motion profiles indicate that the motion of these vehicles is different from the overall motion of the scene captured in the image **300** in **Figure 3.** A portion **418** of the motion image **400** is depicted in greater detail in **Figure 5** below.

Turning now to **Figure 5,** an illustration of an enlarged view of the portion **418** of the motion image **400** from **Figure 4** is depicted in accordance with an illustrative embodiment. As depicted, the motion profile **408** is overlaid on top of the vehicle **308** in the motion image **400.** The motion profile **408** represents local motion that includes the motion of the vehicle **308.** Further, as illustrated, the motion profile **408** also represents local motion that includes the shadow of the vehicle **308.**

With reference now to **Figure 6,** an illustration of a segmented image is depicted in accordance with an illustrative embodiment. A segmented image **600** is an example of one implementation for the segmented image **140** in **Figure 1.** The image **300** from **Figure 3** may be processed by, for example, the image segmenter **130** in **Figure 1,** to form the segmented image **600.**

As depicted, the segmented image **600** includes a plurality of segments **602.** The plurality of segments **602** is an example of one implementation for the plurality of segments **138** in **Figure 1.** Each segment in the plurality of segments **602** comprises one or more contiguous pixels. The contiguous pixels that form a particular segment in the plurality of segments **602** correspond to contiguous pixels in the image **300** in **Figure 3** that share a similar visual characteristic. The pixels that form a segment in the plurality of segments **602** are all assigned a same value representing that visual characteristic.

Examples of segments in the plurality of segments **602** include, but are not limited to, segments **604, 606, 608, 610, 612, 614,** and **616.** Each of these segments may represent a particular feature in the image **300** in **Figure 3.** For example, the segment **604** represents the road on which the vehicles **306, 308, 310,** and **312** are traveling in the image **300** in **Figure 3.** Further, the segment **606** and the segment **614** represent grass in the background **302** in the image **300** in **Figure 3.**

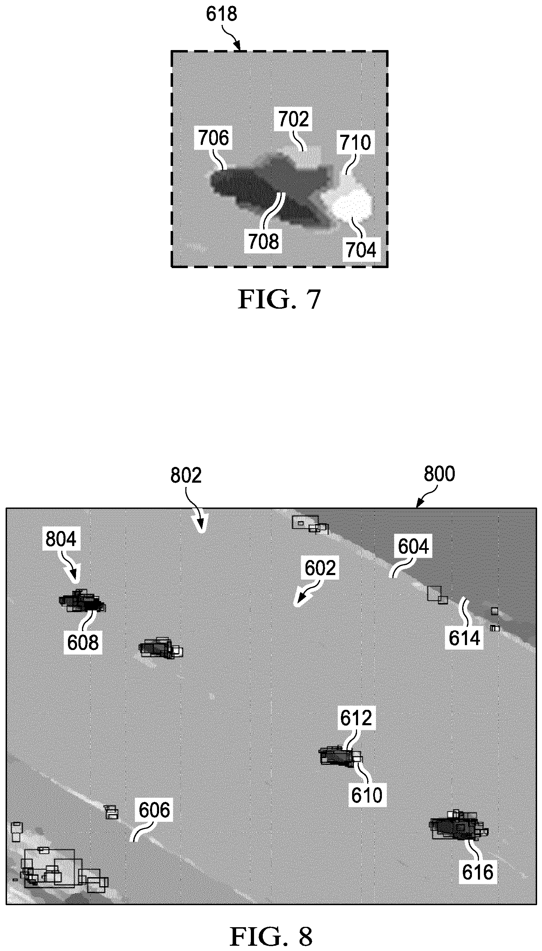

The segment **608** represents the hood of the vehicle **306** in **Figure 3.** The segment **610** represents the hood of the vehicle **310** in **Figure 3,** while the segment **612** represents the front window of the vehicle **310.** The segment **616** represents the shadow cast by the vehicle **312** in the image **300** in **Figure 3.** A portion **618** of the segmented image **600** is depicted in greater detail in **Figure 7** below.

Turning now to **Figure 7,** an illustration of the portion **618** of the segmented image **600** is depicted in accordance with an illustrative embodiment. As depicted, segments **702, 704, 706,** and **708** in the plurality of segments **602** in the segmented image **600** are more clearly seen in this view.

The segment **702** represents the top portion of the body of the vehicle **308** in the image **300** in **Figure 3.** The segment **704** represents at least a portion of the hood of the vehicle **308** in **Figure 3.** The segment **706** represents the shadow cast by the vehicle **308** in the image **300** in **Figure 3.** Further, the segment **708** represents the right side doors of the vehicle **308** in **Figure 3.**

With reference now to **Figure 8,** an illustration of a moving segment image is depicted in accordance with an illustrative embodiment. In **Figure 8,** a moving segment image **800** is an example of one implementation for the moving segment image **145** in **Figure 1.** The motion image **400** from **Figure 4** and the segmented image **600** from **Figure 6** have been integrated by, for example, the image segmenter **130** in **Figure 1,** to form the moving segment image **800.**

As depicted, the moving segment image **800** includes background segments **802** and moving segments **804.** The moving segments **804** are those segments from the plurality of segments **602** in the segmented image **600** in **Figure 6** that are overlapped by the set of motion profiles **404** in the motion image **400** from **Figure 4.** The segments that are overlapped by a same motion profile are fused together to form a master segment.

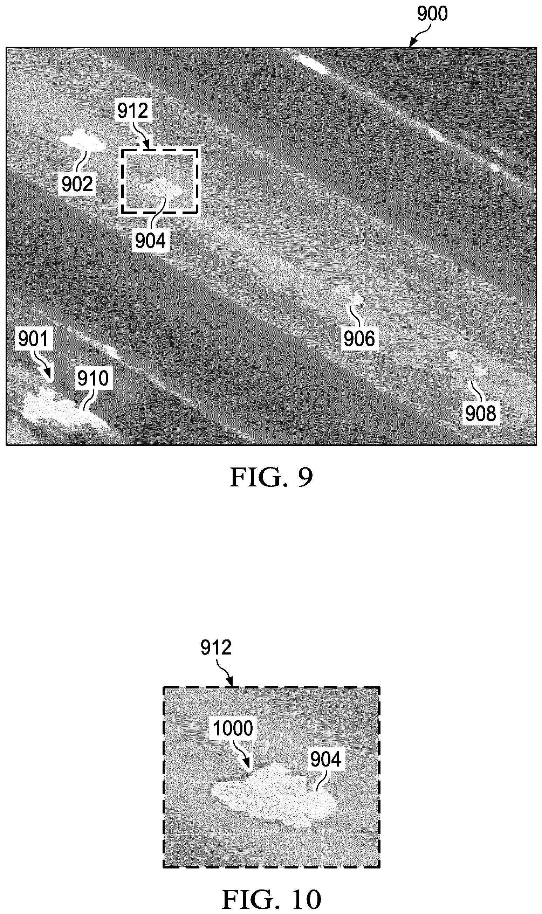

With reference now to **Figure 9,** an illustration of a master image is depicted in accordance with an illustrative embodiment. A master image **900** is an example of one implementation for the master image **143** in **Figure 1.** The moving segments **804** in the moving segment image **800** in **Figure 8** that were overlapped by a same motion profile have been fused by the image segmenter **130** in **Figure 1,** to form a set of master segments **901** in the master image **900.**

The set of master segments **901** is an example of one implementation for the set of master segments **142** in **Figure 1.** Examples of master segments in the set of master segments **901** include, but are not limited to, master segments **902, 904, 906, 908,** and **910.** Each of these master segments comprises moving segments from the moving segment image **800** in **Figure 8** belonging to a same motion profile in the set of motion profiles **404** in **Figure 4.** A portion **912** of the master image **900** including the master segment **904** is depicted in greater detail in **Figure 10** below.

Each master segment in the set of master segments **901** is compared to a set of master segments previously identified for an image processed prior to the image **300** in **Figure 3.** This comparison may be used to determine whether the master segment actually represents a moving object, some irrelevant feature, or an anomaly.

For example, the master segment **902** is compared to the set of master segments identified for a previous image to determine whether the master segment **902** represents a moving object. If the master segment **902** does not match any of the previously identified master segments, then an analysis may be performed to determine whether the master segment **902** represents a previously undetected moving object, an anomaly, or some other irrelevant feature.

Turning now to **Figure 10,** an illustration of an enlarged view of the portion **912** of the master image **900** from **Figure 9** is depicted in accordance with an illustrative embodiment. In this illustrative example, the master segment **904** has been formed such that a contour **1000** of the master segment **904** matches the contour of the vehicle **308** in the image **300** in **Figure 3** within selected tolerances.

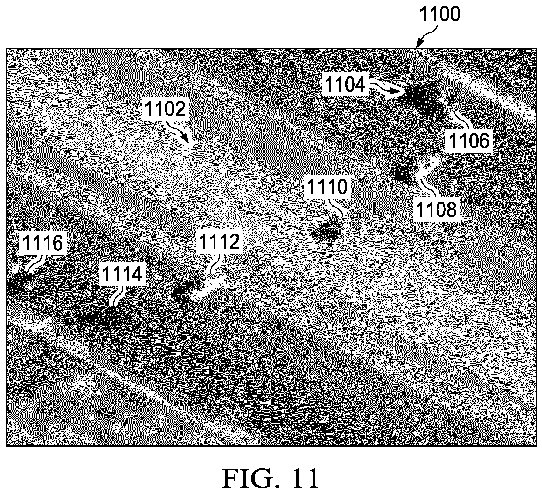

With reference now to **Figure 11,** an illustration of an image is depicted in accordance with an illustrative embodiment. In **Figure 11,** an image **1100** is an example of an image that may be generated by an imaging system, such as the imaging system **102** in **Figure 1.**

In particular, the image **1100** is an example of one implementation for an image in the sequence of images **110** in **Figure 1.** Further, the image **1100** may be an example of one implementation for the current image **128** in **Figure 1.** As depicted, the image **1100** includes a background **1102** and a set of moving objects **1104.** Examples of moving objects in the set of moving objects **1104** in the image **1100** include, but are not limited to, vehicles **1106, 1108, 1110, 1112, 1114,** and **1116.**

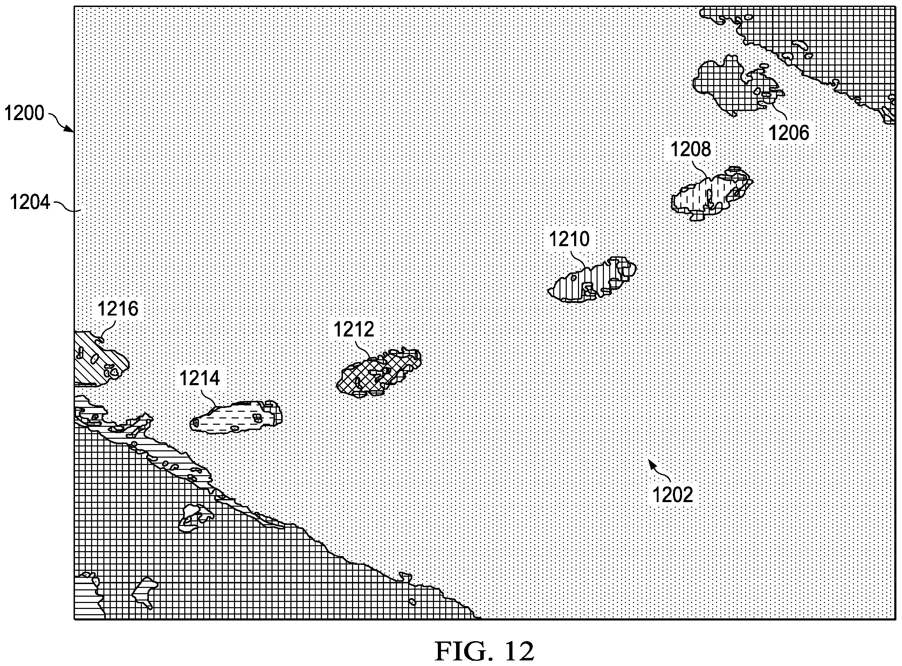

With reference now to **Figure 12,** an illustration of a master image is depicted in accordance with an illustrative embodiment. A master image **1200** is an example of one implementation for the master image **143** in **Figure 1.** The image **1100** from **Figure 11** may be processed by the object tracker **126** in **Figure 1** to form the master image **1200.**

As depicted, the master image **1200** comprises background segments **1202** and a set of master segments **1204.** The set of master segments **1204** include master segments **1206, 1208, 1210, 1212, 1214** and **1216.** In this illustrative example, the master segments **1206, 1208, 1210, 1212, 1214** and **1216** represent the vehicles **1106, 1108, 1110, 1112, 1114,** and **1116,** respectively, from **Figure 11.**

Each master segment in the set of master segments **1204** was formed by fusing multiple segments from a segmented image together. The selection of which segments to be fused to form the set of master segments **1204** was performed using prior fingerprints for an image processed prior to the image **1100** in **Figure 11.**

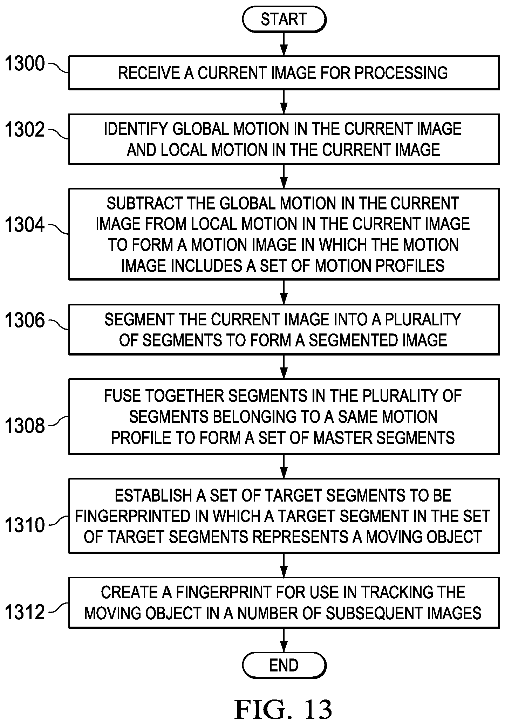

With reference now to **Figure 13,** an illustration of a process for performing image processing in the form of a flowchart is depicted in accordance with an illustrative embodiment. The process illustrated in **Figure 13** may be performed using the image processing system **104** in **Figure 1.**

The process begins by receiving a current image for processing (operation **1300**). The current image is the current image **128** in **Figure 1.** Thereafter, global motion in the current image and local motion in the current image are identified (operation **1302**). The global motion in the current image is then subtracted from the local motion in the current image to form a motion image in which the motion image includes a set of motion profiles (operation **1304**). The operation **1302** and the operation **1304** may be performed using, for example, the motion detector **124** in **Figure 1.**

Next, the current image is segmented into a plurality of segments to form a segmented image (operation **1306**). The operation **1306** may be performed using, for example, the image segmenter **130** in **Figure 1.** The segments in the plurality of segments belonging to a same motion profile are then fused together to form a set of master segments (operation **1308**). Thereafter, a set of target segments to be fingerprinted are established from the set of master segments (operation **1310**). In the operation **1310,** a target segment in the set of target segments represents a moving object.

A fingerprint is then created for each target segment in the set of target segments for use in tracking the moving object in a number of subsequent images (operation **1312**), with the process terminating thereafter. The operation **1312** may be performed by, for example, the fingerprinter **133** in **Figures 1-2.** The fingerprinter may perform the operation **1310** by performing a feature analysis of the master segment.

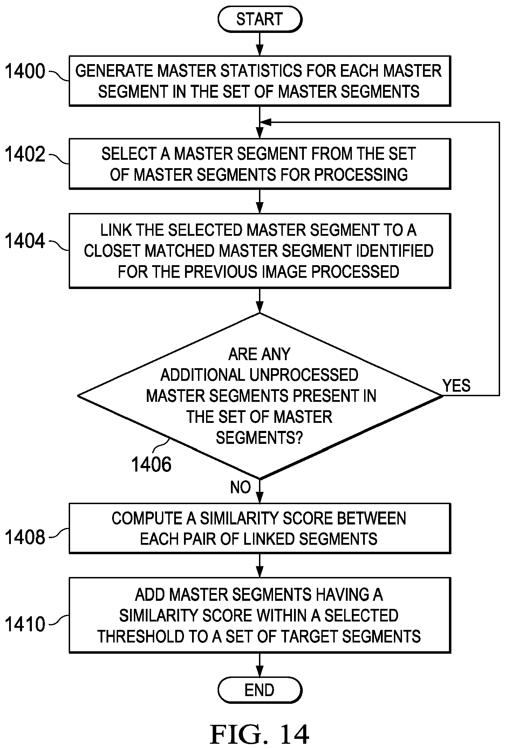

With reference now to **Figure 14,** an illustration of a process for establishing a set of target segments from a set of master segments in the form of a flowchart is depicted in accordance with an illustrative embodiment. The process illustrated in **Figure 14** may be an example of one manner in which the operation **1310** from **Figure 13** may be performed. This process may be performed by, for example, the image segmenter **130** and the consistency checker **132** in **Figure 1.**

The process begins by generating master statistics for each master segment in the set of master segments (operation **1400**). Thereafter, a master segment is selected from the set of master segments for processing (operation **1402**).

The selected master segment is linked to a closest matched master segment identified for the previous image processed (operation **1404**). The closest matched master segment may be, for example, the previously identified master segment that has a location in the previous image that is closest to the location of the selected master segment within the current image. Of course, in other illustrative examples, the closest matched master segment may be based on the master statistics generated for the selected master segment and the master statistics identified for the set of previously identified master segments for the previous image.

Next, the process determines whether any additional unprocessed master segments are present in the set of master segments (operation **1406**). If additional unprocessed master segments are present, the process returns to the operation **1402** as described above. Otherwise, the process computes a similarity score between each pair of linked segments (operation **1408**). This similarity score may be, for example, without limitation, a Kullback-Leibler (KL) divergence value.

In the operation **1408,** the similarity score is computed based on the master statistics identified for the master segments for the current image and for the previously identified master segments for the previous image. In some illustrative examples, the similarity score is computed over a number of images processed previously with respect to the current image.

Thereafter, the master segments having a similarity score within a selected threshold are added to a set of target segments (operation **1410**), with the process terminating thereafter. In this manner, only the master segments that are consistent with previously identified master segments are selected as target segments for further processing.

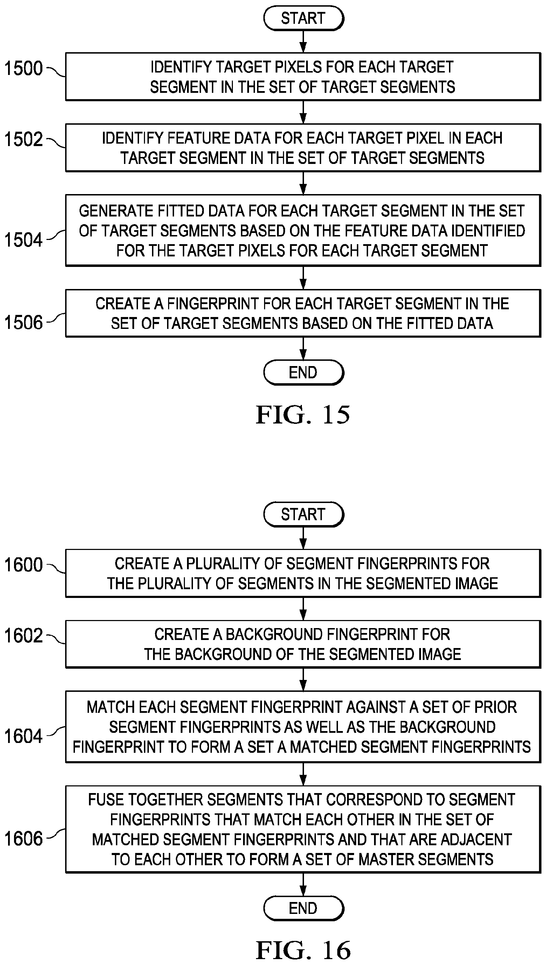

With reference now to **Figure 15,** an illustration of a process for creating a fingerprint in the form of a flowchart is depicted in accordance with an illustrative embodiment. The process illustrated in **Figure 15** may be an example of one manner in which the operation **1312** from **Figure 13** may be implemented. This process may be performed using the fingerprinter **133** in **Figures 1-2.**

The process begins by identifying target pixels for each target segment in the set of target segments (operation **1500**). A target pixel is a pixel that lies within a target segment. Thereafter, feature data is identified for each target pixel in each target segment in the set of target segments (operation **1502**). The feature data for a target pixel may be, for example, a feature vector that includes chroma data, pixel location data, entropy data, other pixel data, or a combination of the above for that target pixel.

Fitted data is then generated for each target segment in the set of target segments based on the feature data generated for the target pixels for each target segment (operation 1504). Next, a fingerprint is created for each target segment in the set of target segments based on the fitted data (operation **1506**), with the process terminating thereafter. In the operation **1506,** a set of fingerprints are created for the set of target segments. These fingerprints are stored for future detection and tracking of moving objects in subsequent images.

With reference now to **Figure 16,** an illustration of a process for forming a set of master segments in the form of a flowchart is depicted in accordance with an illustrative embodiment. The process illustrated in **Figure 16** shows how fingerprints are used to determine which of the plurality of segments 138 are to be fused together to form the set of master segments 142 in addition to the motion image 136. This process may be performed using the fingerprinter **133** in **Figures 1-2.**

The process begins by creating a plurality of segment fingerprints for the plurality of segments in the segmented image (operation **1600**). In the operation **1600,** a segment fingerprint is created for each segment in the plurality of segments.

In one illustrative example, a Gaussian covariance model may be used to create each segment fingerprint. The model used may be as follows:

$$f\left(\mathbf{x};\mu,\Sigma\right)=\frac{1}{\left(2\pi\right)^{N/2}\det\left(\Sigma\right)^{1/2}}\exp\left[-\frac{1}{2}\left(\mathbf{x}-\mu\right)\Sigma^{-1}\left(\mathbf{x}-\mu\right)\right]$$

where $\mu_P$ is the 1x7 matrix mean value over the feature data, {$a,b,L^e,a^e,b^e,u,v$}, for each pixel in a segment, P; where $\Sigma_P$ is the 7x7 full covariance matrix over the feature data; where $a$ and $b$ are the chroma components for each pixel and are considered chroma data; where $e$ is the entropy filtered value; and where u and v are pixel position data. In particular, u is a horizontal position of the pixel within the image and v is the vertical position of the pixel within the image.

In some illustrative examples, not all of the segments in the plurality of segments are fingerprinted. A set of criteria may be used to determine whether a segment in the plurality of segments is fingerprinted. These criteria may include, for example, without limitation, that the number of pixels in the segment is greater than twelve; the feature data for all pixels in a segment is not constant; the segment has a height and width in pixels that is greater than one; the distance in pixels between the edge of the image and the segment is not less than a selected threshold; the segment is less than half the size of the entire image in pixels; and/or other types of criteria.

Thereafter, a background fingerprint is created for the background of the segmented image (operation **1602**). In the operation **1602,** the background of the segmented image may be all portions of the image excluding the plurality of segments. The background fingerprint may also be created using a Gaussian covariance model.

Each segment fingerprint is matched against a set of prior segment fingerprints as well as the background fingerprint to form a set of matched segment fingerprints (operation **1604**). In operation **1604**, this match may be performed in a number of different ways. For example, a similarity score may be used to perform the matching in operation **1604.** In some cases, image registration is used to perform the matching operation **1604.**

In one illustrative example, the Kullback-Leibler divergence value between each segment fingerprint and each previously identified segment fingerprint may be computed. Each segment fingerprint that matches to one of the set of prior segment fingerprints with a Kullback-Leibler divergence value below a selected threshold may be added to the set of matched segment fingerprints. Segment fingerprints that match the background fingerprint with a Kullback-Leibler divergence value below a selected threshold may be excluded from the set of matched segment fingerprints.

Thereafter, the process fuses together segments that correspond to segment fingerprints that match each other in the set of matched segment fingerprints and that are adjacent to each other to form a set of master segments (operation **1606**), with the process terminating thereafter. For example, in the operation **1606**, a first segment fingerprint and a second segment fingerprint in the set of matched segment fingerprints that correspond to a first segment and a second segment, respectively, that are adjacent to each other are identified. A determination may be made as to whether a similarity score between the first segment fingerprint and the second segment fingerprint is within a selected threshold.

The first segment and the second segment may be fused together in response to a determination that the similarity score between the first segment fingerprint and the second segment fingerprint is within the selected threshold. In operation **1606**, the first segment and the second segment are at least one of fused to form a new master segment to be added to the set of master segments and fused into an existing master segment in the set of master segments.

The flowcharts and block diagrams in the different depicted embodiments illustrate the architecture, functionality, and operation of some possible implementations of apparatus and methods in an illustrative embodiment. In this regard, each block in the flowcharts or block diagrams may represent a module, a segment, a function, and/or a portion of an operation or step. For example, one or more of the blocks may be implemented as program code, in hardware, or a combination of the program code and hardware. When implemented in hardware, the hardware may, for example, take the form of integrated circuits that are manufactured or configured to perform one or more operations in the flowcharts or block diagrams.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram.

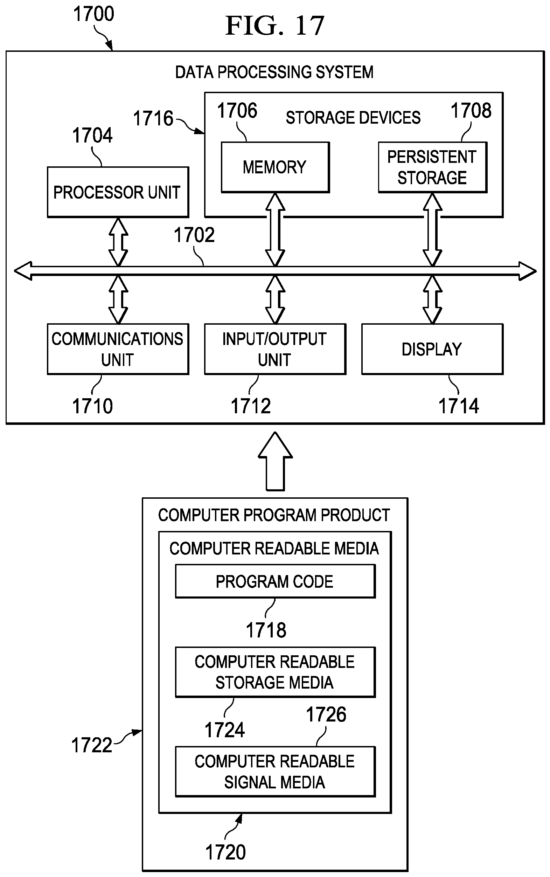

Turning now to **Figure 17**, an illustration of a data processing system in the form of a block diagram is depicted in accordance with an illustrative embodiment. In this illustrative example, a data processing system **1700** may be used to implement one or more computers in computer system **122** in **Figure 1.**

In this illustrative example, the data processing system **1700** includes a communications framework **1702,** which provides communications between a processor unit **1704,** a memory **1706,** a persistent storage **1708,** a communications unit **1710,** an input/output unit **1712,** and a display **1714.** The communications framework **1702** may be implemented as a bus system in some examples.

The processor unit **1704** serves to execute instructions for software that is loaded into the memory **1706** to perform a number of operations. The processor unit **1704** may be a number of processors, a multi-processor core, or some other type of processor, depending on the particular implementation. In some cases, the processor unit **1704** may take the form of a hardware unit, such as a circuit system, an application specific integrated circuit (ASIC), a programmable logic device, or some other suitable type of hardware.

In some cases, the motion detector **124** and/or the object tracker **126** from **Figure 1** may be implemented as processors within the processor unit **1704.** Further, the image segmenter **130,** the consistency checker **132,** and the fingerprinter **133** from **Figure 1** may be implemented as modules within one or more processors in the processor unit **1704.**

The memory **1706** and the persistent storage **1708** are examples of storage devices **1716.** The storage devices **1716** may be in communication with the processor unit **1704** through the communications framework **1702.** A storage device, also referred to as a computer readable storage device, is any piece of hardware capable of storing information such as, for example, without limitation, data, program code in functional form, and/or other suitable information either on a temporary basis and/or a permanent basis. The memory **1706** may be, for example, a random access memory or any other suitable volatile or non-volatile storage device.

The persistent storage **1708** may take various forms and comprise any number of components or devices, depending on the particular implementation. For example, the persistent storage **1708** may be a hard drive, a flash memory, a rewritable optical disk, a rewritable magnetic tape, or some combination of the above. Depending on the implementation, the media used by the persistent storage **1708** may or may not be removable.

The communications unit **1710,** in these examples, provides for communications with other data processing systems or devices. The communications unit **1710** may provide communications through the use of either or both physical and wireless communications links.

The input/output unit **1712** allows for input and output of data with other devices that may be connected to the data processing system **1700.** For example, the input/output unit **1712** may provide a connection for user input through a keyboard, a mouse, and/or some other suitable input device and/or may send output to a printer. The display **1714** provides a mechanism to display information to a user.

Instructions for the operating system, applications, and/or programs may be located in the storage devices **1716**. The processes of the different embodiments may be performed by the processor unit **1704** using computer-implemented instructions. These instructions are referred to as program code, computer usable program code, or computer readable program code and may be read and executed by one or more processors in the processor unit **1704**.

In these examples, program code **1718** is located in a functional form on computer readable media **1720** that is selectively removable and may be loaded onto or transferred to the data processing system **1700** for execution by the processor unit **1704**. The program code **1718** and the computer readable media **1720** form computer program product **1722** in these examples. In some illustrative examples, the motion detector **124** and/or the object tracker **126** from **Figure 1** may be embodied within the computer program product **1722**. In some cases, the image segmenter **130,** the consistency checker **132,** and the fingerprinter **133** from **Figure 1** may be implemented as software modules in the program code **1718**.

The computer readable media **1720** may take the form of computer readable storage media **1724** or computer readable signal media **1726**. The computer readable storage media **1724** is a physical or tangible storage device used to store the program code **1718** rather than a medium that propagates or transmits the program code **1718**. The computer readable storage media **1724** may take the form of, for example, without limitation, an optical or magnetic disk or a persistent storage device that is connected to the data processing system **1700**.

Alternatively, the program code **1718** may be transferred to the data processing system **1700** using the computer readable signal media **1726**. The computer readable signal media **1726** may be, for example, without limitation, a propagated data signal containing the program code **1718**. This data signal may be an electromagnetic signal, an optical signal, and/or some other suitable type of signal that may be transmitted over communications links that are physical and/or wireless.

The different components illustrated for data processing system **1700** are not meant to provide architectural limitations to the manner in which different embodiments may be implemented. The different illustrative embodiments may be implemented in a data processing system including components in addition to or in place of those illustrated for the data processing system **1700**. Other components shown in **Figure 17** can be varied from the illustrative examples shown. The different embodiments may be implemented using any hardware device or system capable of running program code. As one example, the data processing system may include organic components integrated with inorganic components and/or may be comprised entirely of organic components excluding a human being. For example, a storage device may be comprised of an organic semiconductor.

The description of the different illustrative embodiments has been presented for purposes of illustration and description, and is not intended to be exhaustive or limited to the embodiments in the form disclosed. Many modifications and variations will be apparent to those of ordinary skill in the art.

Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

**Claims**

**1.** An image processing system (104) comprising:

a motion detector (124) configured to detect motion within a current image (128) by forming a motion image (136) from the current image (128) and a previous image (134), the motion image (136) including a set of motion profiles (135) representing local motion in the motion image (136); and
an object tracker (126) configured to receive the current image (128) and the motion image (136), the object tracker (126) comprising:

an image segmenter (130) configured to segment the current image (128) in a sequence of images (110) into a plurality of segments (138) to form a segmented image (140) and fuse together segments in the plurality of segments (138) belonging to a same motion profile of the set of motion profiles (135) to form a set of master segments (142), each master segment (142) for representing a set of moving objects or a set of image anomalies, the image segmenter (130) configured to generate master statistics (144) for each master segment (142) of the set of master segments (142) by generating segment data (146) for the respective master segment (152) and fitting the segment data (146) to a mathematical model (148), wherein the segment data (146) includes chroma data; luma data; pixel location data; and/or chroma data that has been filtered using an entropy filter; and
a consistency checker (132) configured to identify a set of target segments (154) from the set of master segments (142) by matching a master segment (152) to a previously identified master segment that was identified for the previous image (134) by determining that a difference between master statistics (144) for the master segment (152) and master statistics identified for the previously identified master segment of the previous image (134) is not greater than a threshold, wherein the set of target segments (154) represents a set of moving objects (155) in the current image (128) and the previous image (134); and
a fingerprinter (133) configured to create a set of target segment fingerprints (156) for the target segments, each target segment fingerprint (156) defining a description of a unique set of features for a moving object, the set of target segment fingerprints (156) for use in tracking the set of moving objects (155) in a number of

subsequent images (162) in the sequence of images (110),

wherein:

each of the plurality of target segment fingerprints (156) is a fingerprint for a corresponding target segment in the plurality of target segments (138);
the fingerprinter (133) is further configured to create a plurality of segment fingerprints (164) for the plurality of segments (138) in the segmented image (140), each of the plurality of segment fingerprints (164) is a fingerprint for a corresponding segment in the plurality of segments (138);
the image segmenter (130) uses the plurality of segment fingerprints (164) to determine which of the plurality of segments (138) to fuse together to form the set of master segments (142) in addition to the set of motion profiles (135);
the object tracker (126) is configured to use the set of target segment fingerprints (156) to track the set of moving objects (155) in the number of subsequent images (162) in the sequence of images (110); and
the image processing system (104) is configured to:

create a background fingerprint for a background of the segmented image (140);
match each segment fingerprint (164) against a set of prior segment fingerprints as well as the background fingerprint to form a set of matched segment fingerprints, the set of prior segment fingerprints are from an image processed prior to the current image (128); and
fuse together segments (138) that correspond to segment fingerprints (164) that match each other in the set of matched segment fingerprints and that are adjacent to each other to form a set of master segments (142).

2. The image processing system (104) of claim 1, wherein the motion detector (124) is further configured to identify local motion and global motion in the current image (128) and subtract the global motion from the local motion in the current image (128) to form the motion image (136).

3. The image processing system (104) of any preceding claim, wherein the mathematical model (148) is a generalized linear model (212).

4. The image processing system (104) of claim 1, wherein the fingerprinter (133) is further configured to perform a feature analysis (206) of a target segment (230) in the set of target segments (154) to form a fingerprint (232) for the target segment to be added to the set of target segment fingerprints (156);

to identify feature data (208) for each target segment (230) in the set of target segments (154), fit the feature data (208) to a number of mathematical models (210) to generate fitted data (228), and create the set of fingerprints (156) using the fitted data (228); and
wherein the number of mathematical models (210) includes at least one of a spatial generalized linear model (212), a feature-only generalized linear model (214), a spatiogram (216), and a histogram (218).

5. A computer-implemented method for tracking moving objects (155) in a sequence of images (110), the computer-implemented method comprising:

detecting motion within a current image (128) in the sequence of images (110) by forming a motion image (136) from the current image (128) and a previous image (134), the motion image (136) including a set of motion profiles (135) representing local motion in the motion image (136);
segmenting the current image (128) into a plurality of segments (138);
fusing together segments in the plurality of segments (138) belonging to a same motion profile of the set of motion profiles (135) to form a set of master segments (142), each master segment (142) for representing a set of moving objects or a set of image anomalies;

creating a plurality of segment fingerprints (164) for the plurality of segments (138), wherein each of the plurality of segment fingerprints (164) is a fingerprint for a corresponding segment in the plurality of segments (138);

using the plurality of segment fingerprints (164) in addition to the set of motion profiles (135) to determine which of the plurality of segments (138) to fuse together by:

creating a background fingerprint for a background of the segmented image (140) ;

matching each segment fingerprint (164) against a set of prior segment fingerprints as well as the background fingerprint to form a set of matched segment fingerprints, the set of prior segment fingerprints are from an image processed prior to the current image (128); and

fusing together segments (138) that correspond to segment fingerprints (164) that match each other in the set of matched segment fingerprints and that are adjacent to each other to form a set of master segments (142);

identifying a set of target segments (154) from the set of master segments (142) by generating master statistics (144) for each master segment (152) in the set of master segments (142); and matching a master segment (152) to a previously identified master segment that was identified for the previous image (134) by determining that a difference between master statistics (144) for the master segment (152) and master statistics identified for the previously identified master segment of the previous image (134) is not greater than a threshold, wherein the set of target segments (154) represents a set of moving objects (155) in the current image (128) and the previous image (134); and

creating a set of target segment fingerprints (156) for the target segments, each target segment fingerprint (156) defining a description of a unique set of features for a moving object;

using the set of target segment fingerprints (156) to track the set of moving objects (155) in a number of subsequent images (162) in the sequence of images (110),

wherein the step of generating the master statistics (144) for each master segment (152) in the set of master segments (142) comprises:

generating segment data (146) for the respective master segment (152), wherein the segment data (146) includes chroma data; luma data; pixel location data; and/or chroma data that has been filtered using an entropy filter; and

fitting the segment data (146) to a mathematical model (148) to generate the master statistics (144) for the master segment (152).

6. The computer-implemented method of claim 5, wherein the step of forming the motion image (136) comprises:

identifying local motion and global motion in the current image (128); and
subtracting the global motion from the local motion to form the motion image (136).

7. The computer-implemented method of claim 6, wherein the step of fusing together the segments in the plurality of segments (138) belonging to the same motion profile to form the set of master segments (142) comprises:

fusing together the segments in the plurality of segments (138) belonging to the same motion profile in the set of motion profiles (135) in the motion image (136) to form the set of master segments (142).

8. The computer-implemented method of any of claims 5 to 7, wherein the mathematical model (148) is a generalized linear model (212).

9. The computer-implemented method of claim 5, wherein the step of creating the set of target segment fingerprints (156) for use in tracking the set of moving objects (155) in the number of subsequent images (162) in the sequence of images (110) comprises:
performing a feature analysis (206) of a target segment (230) in the set of target segments (154) to form a fingerprint (232) in the set of target segment fingerprints (156) for the target segment (230).

10. The computer-implemented method of claim 5, wherein the step of creating the set of target segment fingerprints (156) for use in tracking the set of moving objects (155) in the number of subsequent images (162) in the sequence of images (110) comprises:

identifying feature data (208) for each target segment (230) in the set of target segments (154);
fitting the feature data (208) to a number of mathematical models (210) to generate fitted data (228);
creating the set of target segment fingerprints (156) using the fitted data (228); and wherein the step of fitting the feature data (208) to the number of mathematical models (210) to generate the fitted data (228) comprises: fitting the feature data (208) to the number of mathematical models (210) to generate the fitted data (228), wherein the number of mathematical models (210) includes at least one of a spatial generalized linear model (212), a feature-only generalized linear model (214), a spatiogram (216), and a histogram (218).

**Patentansprüche**

1. Bildverarbeitungssystem (104) umfassend:

einen Bewegungsdetektor (124), der konfiguriert ist, um eine Bewegung innerhalb eines aktuellen Bildes (128) zu erfassen, indem ein Bewegungsbild (136) aus dem aktuellen Bild (128) und einem vorherigen Bild (134) erzeugt wird, wobei das Bewegungsbild (136) einen Satz von Bewegungsprofilen (135) enthält, die eine lokale Bewegung in dem Bewegungsbild (136) darstellen; und
einen Objektverfolger (126), der konfiguriert ist, um das aktuelle Bild (128) und das Bewegungsbild (136) zu empfangen, wobei der Objektverfolger (126) umfasst:

einen Bildsegmentierer (130), der konfiguriert ist, das aktuelle Bild (128) aus einer Folge von Bildern (110) in eine Mehrzahl von Segmenten (138) zu segmentieren, um ein segmentiertes Bild (140) zu erzeugen, und Segmente aus der Mehrzahl von Segmenten (138), die zu einem gleichen Bewegungsprofil des Satzes von Bewegungsprofilen (135) gehört, miteinander zu verschmelzen, um einen Satz von Mastersegmenten (142) zu bilden, wobei jedes Mastersegment (142) zum Darstellen eines Satzes von sich bewegenden Objekten oder eines Satzes von Bildanomalien dient, wobei der Bildsegmentierer (130) konfiguriert ist, um Masterstatistiken (144) für jedes Mastersegment (142) des Satzes von Mastersegmenten (142) zu erzeugen, indem Segmentdaten (146) für das jeweilige Mastersegment (152) erzeugt werden und die Segmentdaten (146) an ein mathematisches Modell (148) angepasst werden, wobei die Segmentdaten (146) Chromadaten, Lumadaten, Pixelpositionsdaten und/oder unter Verwendung eines Entropiefilters gefilterte Chromadaten enthalten; und
einen Konsistenzprüfer (132), der konfiguriert ist, einen Satz von Zielsegmenten (154) aus dem Satz von Mastersegmenten (142) zu identifizieren, indem er ein Mastersegment (152) mit einem zuvor identifizierten Mastersegment abgleicht, das für das vorhergehende Bild (134) identifiziert wurde, indem er bestimmt, dass eine Differenz zwischen der Masterstatistik (144) für das Mastersegment (152) und der Masterstatistik, die für das zuvor identifizierte Mastersegment des vorhergehenden Bildes (134) identifiziert wurde, nicht größer als ein Schwellenwert ist, wobei der Satz von Zielsegmenten (154) einen Satz von sich bewegenden Objekten (155) in dem aktuellen Bild (128) und dem vorhergehenden Bild (134) darstellt; und
einen Fingerprinter (133), der konfiguriert ist, um einen Satz von Zielsegment-Fingerprints (156) für die Zielsegmente zu erzeugen, wobei jeder Zielsegment-Fingerprint (156) eine Beschreibung eines eindeutigen Satzes von Merkmalen für ein sich bewegendes Objekt definiert, wobei der Satz von Zielsegment-Fingerprints (156) zur Verwendung beim Verfolgen des Satzes von sich bewegenden Objekten (155) in einer Anzahl von nachfolgenden Bildern (162) in der Folge von Bildern (110) dient,

wobei:

jeder der Mehrzahl von Zielsegment-Fingerprints (156) ein Fingerprint für ein entsprechendes Zielsegment aus der Mehrzahl von Zielsegmenten (138) ist;
der Fingerprinter (133) ferner konfiguriert ist, um eine Mehrzahl von Segment-Fingerprints (164) für die Mehrzahl von Segmenten (138) in dem segmentierten Bild (140) zu erzeugen, wobei jeder aus der Mehrzahl von Segment-Fingerprints (164) ein Fingerprint für ein entsprechendes Segment aus der Mehrzahl von Segmenten (138) ist;
der Bildsegmentierer (130) die Mehrzahl von Segment-Fingerprints (164) verwendet, um zu bestimmen, welche der Mehrzahl von Segmenten (138) miteinander zu verschmelzen sind, um zusätzlich zu dem Satz von Bewegungsprofilen (135) den Satz von Mastersegmenten (142) zu bilden;
der Objektverfolger (126) konfiguriert ist, um den Satz von Zielsegment-Fingerprints (156) zu verwenden, um den Satz von sich bewegenden Objekten (155) in der Anzahl von nachfolgenden Bildern (162) aus der Folge von Bildern (110) zu verfolgen; und
das Bildverarbeitungssystem (104) konfiguriert ist,

> einen Hintergrund-Fingerprint für einen Hintergrund des segmentierten Bildes (140) zu erzeugen;
> jeden Segment-Fingerprint (164) mit einem Satz früherer Segment-Fingerprints sowie mit dem Hintergrund-Fingerprint abzugleichen, um einen Satz abgeglichener Segment-Fingerprints zu bilden, wobei der Satz früherer Segment-Fingerprints von einem vor dem aktuellen Bild (128) verarbeiteten Bild stammt; und
> Segmente (138), die miteinander abgeglichenen Segment-Fingerabdrücken (164) in dem Satz übereinstimmender Segment-Fingerabdrücke entsprechen und die einander benachbart sind, zu einem Satz von Mastersegmenten (142) zu verschmelzen.

2. Bildverarbeitungssystem (104) nach Anspruch 1, bei dem der Bewegungsdetektor (124) ferner konfiguriert ist, um lokale Bewegung und globale Bewegung im aktuellen Bild (128) zu identifizieren und die globale Bewegung von der lokalen Bewegung im aktuellen Bild (128) zu subtrahieren, um das Bewegungsbild (136) zu erzeugen.

3. Bildverarbeitungssystem (104) nach einem der vorhergehenden Ansprüche, bei dem das mathematische Modell (148) ein verallgemeinertes lineares Modell (212) ist.

4. Bildverarbeitungssystem (104) nach Anspruch 1, bei dem der Fingerprinter (133) ferner konfiguriert ist, um eine Merkmalsanalyse (206) eines Zielsegments (230) in dem Satz von Zielsegmenten (154) durchzuführen, um einen Fingerprint (232) für das Zielsegment zu bilden, der zu dem Satz von Zielsegmentfingerprints (156) hinzugefügt werden soll;

> Merkmalsdaten (208) für jedes Zielsegment (230) in dem Satz von Zielsegmenten (154) zu identifizieren, die Merkmalsdaten (208) an eine Anzahl von mathematischen Modellen (210) anzupassen, um angepasste Daten (228) zu erzeugen, und den Satz von Fingerprints (156) unter Verwendung der angepassten Daten (228) zu erzeugen;
> wobei die Anzahl der mathematischen Modelle (210) mindestens eines von einem räumlichen verallgemeinerten linearen Modell (212), einem verallgemeinerten linearen Nur-Merkmal-Modell (214), einem Spatiogramm (216) und einem Histogramm (218) umfasst.

5. Computerimplementiertes Verfahren zum Verfolgen von sich bewegenden Objekten (155) in einer Folge von Bildern (110), wobei das computerimplementierte Verfahren umfasst:

> Erfassen von Bewegung innerhalb eines aktuellen Bildes (128) aus der Folge von Bildern (110) durch Erzeugen eines Bewegungsbildes (136) aus dem aktuellen Bild (128) und einem vorhergehenden Bild (134), wobei das Bewegungsbild (136) einen Satz von Bewegungsprofilen (135) enthält, die lokale Bewegung in dem Bewegungsbild (136) darstellen;
> Segmentieren des aktuellen Bildes (128) in eine Mehrzahl von Segmenten (138);
> Verschmelzen von Segmenten aus der Mehrzahl von Segmenten (138), die zu einem gleichen Bewegungsprofil des Satzes von Bewegungsprofilen (135) gehören, um einen Satz von Mastersegmenten (142) zu bilden, wobei jedes Mastersegment (142) dazu dient, einen Satz von sich bewegenden Objekten oder einen Satz von Bildanomalien darzustellen;
> Erzeugen einer Mehrzahl von Segment-Fingerprints (164) für die Mehrzahl von Segmenten (138), wobei jeder der Mehrzahl von Segment-Fingerprints (164) ein Fingerprint für ein entsprechendes Segment aus der Mehrzahl von Segmenten (138) ist;
> Verwenden der Mehrzahl von Segment-Fingerprints (164) zusätzlich zu dem Satz von Bewegungsprofilen (135), um zu bestimmen, welche der Mehrzahl von Segmenten (138) miteinander zu verschmelzen sind, durch:

>> Erzeugen eines Hintergrund-Fingerprints für einen Hintergrund des segmentierten Bildes (140);
>> Abgleichen jedes Segment-Fingerprints (164) mit einem Satz früherer Segment-Fingerprints sowie mit dem Hintergrund-Fingerprint, um einen Satz abgeglichener Segment-Fingerprints zu bilden, wobei der Satz früherer Segment-Fingerprints von einem Bild stammt, das vor dem aktuellen Bild (128) verarbeitet wurde; und
>> Verschmelzen von Segmenten (138), die in dem Satz von abgeglichenen Segment-Fingerprints übereinstimmenden Segment-Fingerprints (164) entsprechen und die einander benachbart sind, um einen Satz von Mastersegmenten (142) zu bilden;

Identifizieren eines Satzes von Zielsegmenten (154) aus dem Satz von Mastersegmenten (142) durch Erzeugen von Masterstatistiken (144) für jedes Mastersegment (152) aus dem Satz von Mastersegmenten (142); und Abgleichen eines Mastersegments (152) mit einem zuvor identifizierten Mastersegment, das für das vorherige Bild (134) identifiziert wurde, durch Bestimmen, dass eine Differenz zwischen der Masterstatistik (144) für das Mastersegment (152) und der Masterstatistik, die für das zuvor identifizierte Mastersegment des vorherigen Bildes (134) identifiziert wurde, nicht größer als ein Schwellenwert ist, wobei der Satz von Zielsegmenten (154) einen Satz von sich bewegenden Objekten (155) in dem aktuellen Bild (128) und dem vorherigen Bild (134) darstellt; und

Erzeugen eines Satzes von Zielsegment-Fingerprints (156) für die Zielsegmente, wobei jeder Zielsegment-Fingerprint (156) eine Beschreibung eines eindeutigen Satzes von Merkmalen für ein sich bewegendes Objekt definiert;

Verwenden des Satzes von Zielsegment-Fingerprints (156) zum Verfolgen des Satzes von sich bewegenden Objekten (155) in einer Anzahl von nachfolgenden Bildern (162) aus der Folge von Bildern (110),

wobei der Schritt des Erzeugens der Masterstatistiken (144) für jedes Mastersegment (152) in dem Satz von Mastersegmenten (142) umfasst:

Erzeugen von Segmentdaten (146) für das jeweilige Mastersegment (152), wobei die Segmentdaten (146) Chromadaten, Lumadaten, Pixelpositionsdaten und/oder unter Verwendung eines Entropiefilters gefilterte Chromadaten umfassen; und

Anpassen der Segmentdaten (146) an ein mathematisches Modell (148), um die Masterstatistik (144) für das Mastersegment (152) zu erzeugen.

6. Computerimplementiertes Verfahren nach Anspruch 5, bei dem der Schritt des Erzeugen des Bewegungsbildes (136) umfasst:

Identifizieren von lokaler Bewegung und globaler Bewegung in dem aktuellen Bild (128); und
Subtrahieren der globalen Bewegung von der lokalen Bewegung, um das Bewegungsbild (136) zu erzeugen.

7. Computerimplementiertes Verfahren nach Anspruch 6, bei dem der Schritt des Verschmelzens der Segmente aus der Mehrzahl von Segmenten (138), die zu demselben Bewegungsprofil gehören, um den Satz von Mastersegmenten (142) zu bilden, umfasst:
Verschmelzen der Segmente aus der Mehrzahl von Segmenten (138), die zu demselben Bewegungsprofil aus der Gruppe von Bewegungsprofilen (135) in dem Bewegungsbild (136) gehören, um die Gruppe von Mastersegmenten (142) zu bilden.

8. Computerimplementiertes Verfahren nach einem der Ansprüche 5 bis 7, bei dem das mathematische Modell (148) ein verallgemeinertes lineares Modell (212) ist.

9. Computerimplementiertes Verfahren nach Anspruch 5, bei dem der Schritt des Erzeugens des Satzes von Zielsegment-Fingerprints (156) zur Verwendung bei der Verfolgung des Satzes von sich bewegenden Objekten (155) in der Anzahl von nachfolgenden Bildern (162) aus der Folge von Bildern (110) umfasst:
Durchführen einer Merkmalsanalyse (206) eines Zielsegments (230) aus dem Satz von Zielsegmenten (154), um einen Fingerprint (232) in dem Satz von Zielsegment-Fingerprints (156) für das Zielsegment (230) zu bilden.

10. Computerimplementiertes Verfahren nach Anspruch 5, bei dem der Schritt des Erzeugens des Satzes von Zielsegment-Fingerprints (156) zur Verwendung bei der Verfolgung des Satzes von sich bewegenden Objekten (155) in der Anzahl von nachfolgenden Bildern (162) aus der Folge von Bildern (110) umfasst:

Identifizieren von Merkmalsdaten (208) für jedes Zielsegment (230) aus dem Satz von Zielsegmenten (154);
Anpassen der Merkmalsdaten (208) an eine Anzahl von mathematischen Modellen (210), um angepasste Daten (228) zu erzeugen;
Erzeugen des Satzes von Zielsegment-Fingerprints (156) unter Verwendung der angepassten Daten (228); und wobei der Schritt des Anpassens der Merkmalsdaten (208) an die Anzahl von mathematischen Modellen (210) zum Erzeugen der angepassten Daten (228) umfasst:
Anpassen der Merkmalsdaten (208) an die Anzahl der mathematischen Modelle (210), um die angepassten Daten (228) zu erzeugen, wobei die Anzahl der mathematischen Modelle (210) mindestens eines von einem räumlichen verallgemeinerten linearen Modell (212), einem verallgemeinerten linearen Nur-Merkmal-Modell (214), einem Spatiogramm (216) und einem Histogramm (218) umfasst.

**Revendications**

1. Système de traitement d'image (104) comprenant :

    un détecteur de mouvement (124) conçu pour détecter un mouvement à l'intérieur d'une image actuelle (128) en formant une image de mouvement (136) à partir de l'image actuelle (128) et une image précédente (134), l'image de mouvement (136) comprenant un ensemble de profils de mouvement (135) représentant un mouvement local dans l'image du mouvement (136) ; et
    un traqueur d'objet (126) conçu pour recevoir l'image actuelle (128) et l'image du mouvement (136), le traqueur d'objet (126) comprenant :
    un segmenteur d'image (130) conçu pour segmenter l'image actuelle (128) dans une séquence d'images (110) en une pluralité de segments (138) pour former une image segmentée (140) et fusionner ensemble des segments dans la pluralité de segments (138) appartenant au même profil de mouvement de l'ensemble de profils de mouvement (135) pour former un ensemble de segments maîtres (142), chaque segment maître (142) représentant un ensemble d'objets en mouvement ou un ensemble d'anomalies d'images, le segmenteur d'image (130) étant conçu pour générer des statistiques de maître (144) pour chaque segment maître (142) de l'ensemble de segments maîtres (142) en générant des données de segment (146) pour le segment maître (152) correspondant et en adaptant les données du segment (146) à un modèle mathématique (148), dans lequel les données du segment (146) comprennent des données de chrominance ; des données de luminance ; des données de localisation de pixels ; et/ou des données de chrominance qui ont été filtrées à l'aide d'un filtre d'entropie ; et

        un vérificateur de cohérence (132) conçu pour identifier un ensemble de segments cibles (154) parmi l'ensemble de segments maîtres (142) en faisant correspondre un segment maître (152) avec un segment maître précédemment identifié qui a été identifié pour l'image précédente (134) en déterminant qu'une différence entre des statistiques de maître (144) pour le segment maître (152) et des statistiques de maître identifiées pour le segment maître précédemment identifié de l'image précédente (134) n'est pas supérieure à un seuil, dans lequel l'ensemble de segments cibles (154) représente un ensemble d'objets en mouvement (155) dans l'image actuelle (128) et l'image précédente (134) ; et
        un générateur d'empreintes (133) conçu pour créer un ensemble d'empreintes de segments cibles (156) pour les segments cibles, chaque empreinte de segment cible (156) définissant une description d'un ensemble unique de caractéristiques pour un objet en mouvement, l'ensemble d'empreintes de segments cibles (156) étant utilisées pour le suivi de l'ensemble d'objets en mouvement (155) dans plusieurs images suivantes (162) dans la séquence d'images (110), dans lequel :

    chacune de la pluralité d'empreintes de segments cibles (156) est une empreinte pour un segment cible correspondant dans la pluralité de segments cibles (138) ;
    le générateur d'empreintes (133) est en outre conçu pour créer une pluralité d'empreintes de segments (164) pour la pluralité de segments (138) dans l'image segmentée (140), chacune de la pluralité d'empreintes de segments (164) étant une empreinte pour un segment correspondant dans la pluralité de segments (138) ;
    le segmenteur d'image (130) utilise la pluralité d'empreintes de segments (164) pour déterminer lesquels de la pluralité de segments (138) il faut fusionner ensemble pour former l'ensemble de segments maîtres (142) en plus de l'ensemble de profils de mouvement (135) ;
    le traqueur d'objet (126) est conçu pour utiliser l'ensemble d'empreintes de segments cibles (156) pour traquer l'ensemble d'objets en mouvement (155) dans les images suivantes (162) de la séquence d'images (110) ; et
    le système de traitement d'image (104) est conçu pour :

        créer une empreinte d'arrière-plan pour un arrière-plan de l'image segmentée (140) ;
        faire correspondre chaque empreinte de segment (164) avec un ensemble d'empreintes de segments précédents ainsi qu'avec l'empreinte d'arrière-plan pour former un ensemble d'empreintes de segments concordantes, l'ensemble d'empreintes de segments précédents provenant d'une image traitée avant l'image actuelle (128) ; et
        fusionner ensemble les segments (138) qui correspondent aux empreintes de segments (164) qui correspondent entre elles dans l'ensemble d'empreintes de segments concordantes et qui sont adjacents entre eux pour former un ensemble de segments maîtres (142).

**2.** Système de traitement d'image (104) selon la revendication 1, dans lequel le détecteur de mouvement (124) est en outre conçu pour identifier un mouvement local et un mouvement global dans l'image actuelle (128) et soustraire le mouvement global du mouvement local dans l'image actuelle (128) pour former l'image de mouvement (136).

**3.** Système de traitement d'image (104) selon l'une des revendications précédentes, dans lequel le modèle mathématique (148) est un modèle linéaire généralisé (212).

**4.** Système de traitement d'image (104) selon la revendication 1, dans lequel le générateur d'empreintes (133) est en outre conçu pour effectuer une analyse de caractéristiques (206) d'un segment cible (230) dans l'ensemble segments cibles (154) pour former une empreinte (232) pour le segment cible à ajouter à l'ensemble d'empreintes de segments cibles (156) ;

pour identifier des données de caractéristiques (208 pour chaque segment cible (230) de l'ensemble de segments cibles (154), adapter les données de caractéristiques (208) à plusieurs modèles mathématiques (210) afin de générer des données adaptées (228) et de créer l'ensemble d'empreintes (156) à l'aide des données adaptées (228) ; et

dans lequel les modèles mathématiques (210) comprennent au moins un parmi un modèle linéaire généralisé spatial (212), un modèle linéaire généralisé caractéristique seulement (214), un spatiogramme (216) et un histogramme (218).

**5.** Procédé implémenté par ordinateur pour le suivi d'objets en mouvement (155) dans une séquence d'images (110), ce procédé implémenté par ordinateur comprenant :

la détection d'un mouvement dans une image actuelle (128) dans la séquence d'images (110) en formant une image de mouvement (136) à partir de l'image actuelle (128) et d'une image précédente (134), l'image de mouvement (136) comprenant un ensemble de profils de mouvement (135) représentant un mouvement local dans l'image du mouvement (136) ; et

la segmentation de l'image actuelle (128) en une pluralité de segments (138) ;

la fusion des segments dans la pluralité de segments (138) appartenant à un même profil de mouvement de l'ensemble de profils de mouvement (135) pour former un ensemble de segments maîtres (142), chaque segment maître (142) représentant un ensemble d'objets en mouvement ou un ensemble d'anomalies d'images ;

la création d'une pluralité d'empreintes de segments (164) pour la pluralité de segments (138), dans lequel chacune de la pluralité d'empreintes de segments (164) est une empreinte pour un segment correspondant dans la pluralité de segments (138) ;

l'utilisation de la pluralité d'empreintes de segments (164) en plus de l'ensemble de profils de mouvements (135) pour déterminer lesquels de la pluralité de segments (138) il faut fusionner ensemble :

en créant une empreinte d'arrière-plan pour un arrière-plan de l'image segmentée (140) ;

en faisant correspondre chaque empreinte de segment (164) avec un ensemble d'empreintes de segments précédents ainsi qu'avec l'empreinte d'arrière-plan pour former un ensemble d'empreintes de segments concordantes, l'ensemble d'empreintes de segments précédents provenant d'une image traitée avant l'image actuelle (128) ; et

en fusionnant ensemble les segments (138) qui correspondent aux empreintes de segments (164) qui correspondent entre elles dans l'ensemble d'empreintes de segments concordantes et qui sont adjacents entre eux pour former un ensemble de segments maîtres (142) ;

l'identification d'un ensemble de segments cibles (154) parmi l'ensemble de segments maîtres (142) en générant des statistiques de maîtres (144) pour chaque segment maître (152) de l'ensemble de segments maîtres (142) ; et en faisant correspondre un segment maître (152) avec un segment maître précédemment identifié qui a été identifié pour l'image précédente (134) en déterminant qu'une différence entre des statistiques de maître (144) pour le segment maître (152) et des statistiques de maître identifiées pour le segment maître précédemment identifié de l'image précédente (134) n'est pas supérieure à un seuil, dans lequel l'ensemble de segments cibles (154) représente un ensemble d'objets en mouvement (155) dans l'image actuelle (128) et l'image précédente (134) ; et

la création d'un ensemble d'empreintes de segments (156) pour les segments cibles, chaque empreinte de segment (156) définissant une description d'un ensemble unique de caractéristiques pour un objet en mouvement ;

l'utilisation de l'ensemble d'empreintes de segments cibles (156) pour traquer l'ensemble d'objets en mouvement (155) dans les images suivantes (162) de la séquence d'images (110),
dans lequel l'étape de génération des statistiques de maître (144) pour chaque segment maître (152) de l'ensemble de segments maîtres (142), comprend :

la génération de données de segments (146) pour le segment maître (152), dans lequel les données de segments (146) comprennent des données de chrominance ; des données de luminance ; des données de localisation de pixels ; et/ou des données de chrominance qui ont été filtrées à l'aide d'un filtre d'entropie ; et
l'adaptation des données de segments (146) à un modèle mathématique (148) pour générer les statistiques de maître (144) pour le segment maître (152).

6. Procédé implémenté par ordinateur selon la revendication 5, dans lequel l'étape de formation de l'image du mouvement (136) comprend :

l'identification d'un mouvement local et d'un mouvement global dans l'image actuelle (128) ; et
la soustraction du mouvement global du mouvement local pour former l'image de mouvement (136).

7. Procédé implémenté par ordinateur selon la revendication 6, dans lequel l'étape de fusion des segments de la pluralité de segments (138) appartenant au même profil de mouvement pour former l'ensemble de segments maîtres (142) comprend :
la fusion des segments de la pluralité de segments (138) appartenant au même profil de mouvement dans l'ensemble de profils de mouvement (135) dans l'image de mouvement (136) pour former l'ensemble de segments maîtres (142).

8. Procédé implémenté par ordinateur selon l'une des revendications 5 à 7, dans lequel le modèle mathématique (148) est un modèle linéaire généralisé (212).

9. Procédé implémenté par ordinateur selon la revendication 5, dans lequel l'étape de création de l'ensemble d'empreintes de segments cibles (156) utilisé pour le suivi de l'ensemble d'objets en mouvement (155) dans les images suivantes (162) de la séquence d'images (110) comprend :
la réalisation d'une analyse de caractéristiques (206) d'un segment cible (230) de l'ensemble de segments cibles (154) pour former une empreinte (232) dans l'ensemble d'empreintes de segments cibles (156) pour le segment cible (230).

10. Procédé implémenté par ordinateur selon la revendication 5, dans lequel l'étape de création de l'ensemble d'empreintes de segments cibles (156) utilisé pour le suivi de l'ensemble d'objets en mouvement (155) dans les images suivantes (162) de la séquence d'images (110) comprend :

l'identification de données de caractéristiques (208) pour chaque segment cible (230) de l'ensemble de segments cibles (154) ;
l'adaptation des données de caractéristiques (208) à des modèles mathématiques (210) pour générer des données adaptées (228) ;
la création de l'ensemble d'empreintes de segments cibles (156) à l'aide des données adaptées (228) ; et dans lequel l'étape d'adaptation des données de caractéristiques (208) aux modèles mathématiques (210) pour générer les données adaptées (228) comprend :
l'adaptation des données de caractéristiques (208) aux modèles mathématiques (210) pour générer les données adaptées (228), dans lequel les modèles mathématiques (210) comprennent au moins un parmi un modèle linéaire généralisé spatial (212), un modèle linéaire généralisé caractéristique seulement (214), un spatiogramme (216) et un histogramme (218) .

FIG. 1

FIG. 2

EP 2 713 308 B1

FIG. 3

FIG. 4

FIG. 5

FIG. 6

FIG. 7

FIG. 8

FIG. 9

FIG. 10

FIG. 11

FIG. 12

EP 2 713 308 B1

START

1300 — RECEIVE A CURRENT IMAGE FOR PROCESSING

1302 — IDENTIFY GLOBAL MOTION IN THE CURRENT IMAGE AND LOCAL MOTION IN THE CURRENT IMAGE

1304 — SUBTRACT THE GLOBAL MOTION IN THE CURRENT IMAGE FROM LOCAL MOTION IN THE CURRENT IMAGE TO FORM A MOTION IMAGE IN WHICH THE MOTION IMAGE INCLUDES A SET OF MOTION PROFILES

1306 — SEGMENT THE CURRENT IMAGE INTO A PLURALITY OF SEGMENTS TO FORM A SEGMENTED IMAGE

1308 — FUSE TOGETHER SEGMENTS IN THE PLURALITY OF SEGMENTS BELONGING TO A SAME MOTION PROFILE TO FORM A SET OF MASTER SEGMENTS

1310 — ESTABLISH A SET OF TARGET SEGMENTS TO BE FINGERPRINTED IN WHICH A TARGET SEGMENT IN THE SET OF TARGET SEGMENTS REPRESENTS A MOVING OBJECT

1312 — CREATE A FINGERPRINT FOR USE IN TRACKING THE MOVING OBJECT IN A NUMBER OF SUBSEQUENT IMAGES

END

FIG. 13

START

1400 — GENERATE MASTER STATISTICS FOR EACH MASTER
SEGMENT IN THE SET OF MASTER SEGMENTS

1402 — SELECT A MASTER SEGMENT FROM THE SET
OF MASTER SEGMENTS FOR PROCESSING

1404 — LINK THE SELECTED MASTER SEGMENT TO A
CLOSET MATCHED MASTER SEGMENT IDENTIFIED
FOR THE PREVIOUS IMAGE PROCESSED

ARE ANY
ADDITIONAL UNPROCESSED
MASTER SEGMENTS PRESENT IN
THE SET OF MASTER
SEGMENTS?

1406

YES

NO

1408 — COMPUTE A SIMILARITY SCORE BETWEEN
EACH PAIR OF LINKED SEGMENTS

1410 — ADD MASTER SEGMENTS HAVING A
SIMILARITY SCORE WITHIN A SELECTED
THRESHOLD TO A SET OF TARGET SEGMENTS

END

FIG. 14

START

1500 — IDENTIFY TARGET PIXELS FOR EACH TARGET
SEGMENT IN THE SET OF TARGET SEGMENTS

1502 — IDENTIFY FEATURE DATA FOR EACH TARGET PIXEL IN EACH
TARGET SEGMENT IN THE SET OF TARGET SEGMENTS

1504 — GENERATE FITTED DATA FOR EACH TARGET SEGMENT IN THE SET
OF TARGET SEGMENTS BASED ON THE FEATURE DATA IDENTIFIED
FOR THE TARGET PIXELS FOR EACH TARGET SEGMENT

1506 — CREATE A FINGERPRINT FOR EACH TARGET SEGMENT IN THE
SET OF TARGET SEGMENTS BASED ON THE FITTED DATA

END

## FIG. 15

START

1600 — CREATE A PLURALITY OF SEGMENT FINGERPRINTS FOR
THE PLURALITY OF SEGMENTS IN THE SEGMENTED IMAGE

1602 — CREATE A BACKGROUND FINGERPRINT FOR
THE BACKGROUND OF THE SEGMENTED IMAGE

1604 — MATCH EACH SEGMENT FINGERPRINT AGAINST A SET OF PRIOR
SEGMENT FINGERPRINTS AS WELL AS THE BACKGROUND
FINGERPRINT TO FORM A SET A MATCHED SEGMENT FINGERPRINTS

1606 — FUSE TOGETHER SEGMENTS THAT CORRESPOND TO SEGMENT
FINGERPRINTS THAT MATCH EACH OTHER IN THE SET OF
MATCHED SEGMENT FINGERPRINTS AND THAT ARE ADJACENT
TO EACH OTHER TO FORM A SET OF MASTER SEGMENTS

END

## FIG. 16

1700

FIG. 17

DATA PROCESSING SYSTEM

STORAGE DEVICES 1708

1716    1706

1704

PROCESSOR UNIT          MEMORY          PERSISTENT STORAGE

1702

COMMUNICATIONS UNIT          INPUT/OUTPUT UNIT          DISPLAY

1710          1712          1714

COMPUTER PROGRAM PRODUCT

COMPUTER READABLE MEDIA

PROGRAM CODE

1718

COMPUTER READABLE STORAGE MEDIA

1724          1726

1722

COMPUTER READABLE SIGNAL MEDIA

1720

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. NATHAN MUNDHENK.** *Detection of unknown targets from aerial camera and extraction of simple object fingerprints for the purpose of target reacquisition*

- **KANG-YU NI.** *Manifold-based fingerprinting for target identification*